# EUROPEAN PATENT APPLICATION

(11) **EP 1 551 122 A1**
(43) Date of publication of application: **06.07.2005**
(21) Application number: 03770073.9
(22) Date of filing: 31.10.2003
(51) Int. Cl.: H04J 11/00

(54) **SYNCHRONOUS FOLLOW-UP DEVICE AND METHOD**

(30) Priority: 01.11.2002 JP 2002320445; 15.11.2002 JP 2002332052; 15.11.2002 JP 2002332053
(71) Applicant: MATSUSHITA ELECTRIC INDUSTRIAL CO., LTD., Kadoma-shi, Osaka 571-8501 (JP)
(72) Inventor: MORITA, Minori, Kanazawa-shi, Ishikawa 920-0813 (JP); FUTAGI, Sadaki, Ishikawa-gun, Ishikawa 929-0224 (JP); SUMASU, Atsushi, Yokosuka-shi, Kanagawa 238-0013 (JP)
(74) Representative: Grünecker, Kinkeldey, Stockmair & Schwanhäusser
(86) International application number: PCT/JP2003/013983
(87) International publication number: WO 2004/040816

(57) **Abstract**

A replica generation section 103 performs multicarrier demodulation of a known signal of a received signal and generates a replica. A delay profile generation section 104 calculates a correlation value between the replica and the received signal and generates a delay profile. An integral value calculation section 105 integrates the correlation values for each fixed range of the delay profile and calculates a plurality of integral values. A maximum integral value detection section 106 detects the maximum integral value, which is the maximum value of the integral values. A demodulation timing detection section 107 detects the demodulation timing at which multicarrier demodulation is performed from the position of the maximum integral value.

## Description

### Technical Field

The present invention relates to a synchronization tracking apparatus and method in a multicarrier radio communication system.

### Background Art

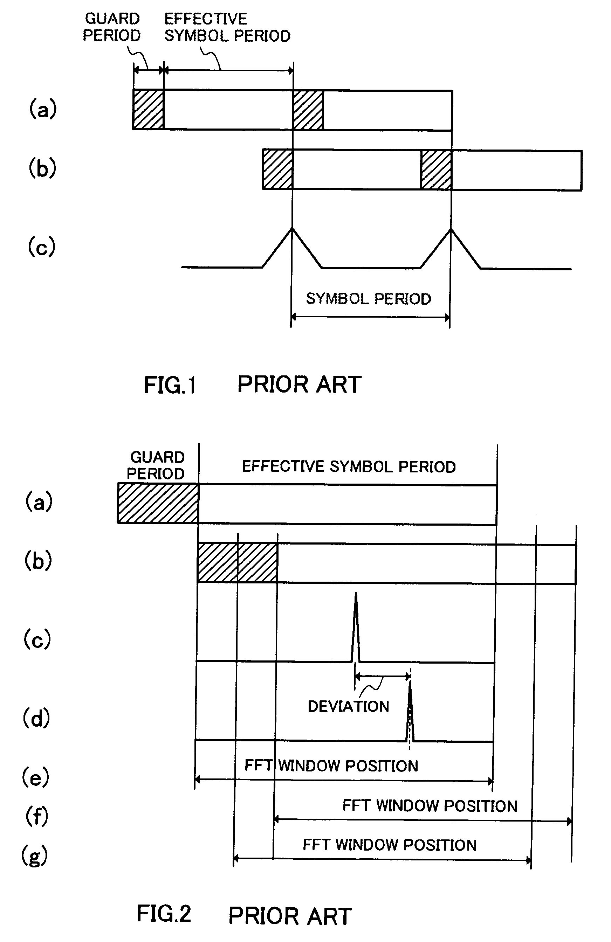

A conventional synchronization tracking method will be described with reference to FIG.1 through FIG.3. In a conventional synchronization tracking method, an FFT timing position is detected by processing called guard correlation processing. With the OFDM (Orthogonal Frequency Division Multiplexing) communication method, in order to mitigate multipath effects, OFDM symbols contained in a received signal comprise a guard section and an effective symbol section, as shown in FIG.1(a), with the guard section reproducing the latter part of the effective symbols cyclically. As shown in FIG.1(b), an OFDM signal is delayed by the equivalent of the effective symbol period, and OFDM signals before and after the delay are multiplied. A correlation value is obtained so that the delayed signal component matches the signal component of the delay-free path in the guard period part, and correlation does not appear in other sections. This correlation signal is slide-integrated for the length of the guard period. As a result, as shown in FIG.1(c), a triangular waveform is obtained in which a peak appears at the symbol boundary in a delay-free path signal. An approximation of FFT synchronization timing can be detected from this peak.

Next, a complex signal at the carrier location of the signal in which the reference signal at the start of a frame is modulated is obtained from a signal that has undergone FFT (Fast Fourier Transform) processing, and a transmission path characteristic is found by means of the known reference signal. Following this, IFFT (Inverse Fast Fourier Transform) processing is performed, the power value of the IFFT-processed signal is calculated, and the power value peak is detected. Using this power value peak position, the FFT window position is determined, and an approximation of the aforementioned FFT synchronization timing found previously is corrected.

FIG.2 (a) shows received OFDM symbols. Here, it is assumed that there is no positional deviation from the section IFFT-processed on the transmitting side. The impulse response of the signal shown in FIG.2 (a) appears at the position shown in FIG.2(c) (for the sake of explanation, it is assumed that the impulse appears in the center when the DC component undergoes inverse Fourier transform processing). The FFT window position at this time is as shown in FIG.2(e).

However, in a case where positional deviation occurs in OFDM symbols, as shown in FIG.2(b), the impulse position is also displaced and appears at the position shown in FIG.2(d). Thus, the position of the Fourier transform window is displaced by the amount of deviation from position {FIG.2 (c) } at which it should originally appear. In the case in FIG.2, the main wave impulse component appears in the center as a result of the Fourier transform window position being changed to the position shown in FIG.2(f). In this way the FFT window position is decided, but when an impulse appears as shown in FIG.2(d), the FFT window can also be set to a position displaced by a fixed amount up to half the guard section, as shown in FIG. 2 (g) . With regard to delay profile output, in both the case where the FFT window is set to the position shown in FIG.2(f) and the case where the FFT window is set to the position shown in FIG.2(g), output is performed in a fixed manner with the normal FFT window position as the center. By this means, a pre-ghost and after-ghost can be confirmed.

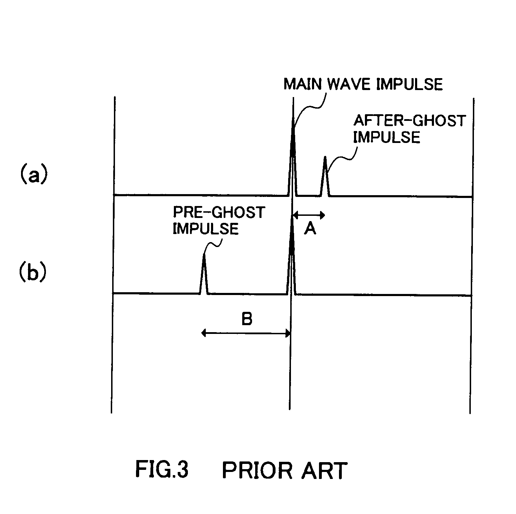

FIG.3(a) shows the delay profile when there is an after-ghost, and FIG.3(b) shows the delay profile when there is a pre-ghost. That is to say, in the case in FIG. 3 (a), the impulse after the position of the main wave impulse in the center is identified as an after-ghost, and time A can be measured as the after-ghost delay time. Similarly, in the case in FIG.3(b), the impulse before the position of the main wave impulse in the center is identified as a pre-ghost, and time B can be measured as the pre-ghost delay time.

An FFT window position recovery apparatus, which is one kind of synchronization tracking apparatus, acquires an initial predicted value using the peak of cross-correlation values of a known training sequence or the like, and then adjusts the FFT synchronization timing based on this acquired peak position (see, for example, Unexamined Japanese Patent Publication No.2001-268042).

However, with a conventional synchronization tracking apparatus, since the peak value of correlation values is not necessarily always at the start portion of a path group (main wave), when FFT synchronization timing is detected using the peak value of correlation values, even if a guard interval section is inserted in order to mitigate multipath effects when the correlation value peak value position and the path group position are widely separated on the time axis, multipath effects cannot be mitigated in a case where the peak value position exceeds the interval permitted by the guard interval section, and there is thus a problem of reception quality degrading because multipath effects cannot be mitigated using guard interval sections.

### Disclosure of Invention

It is an object of the present invention to provide a synchronization tracking apparatus and method that enable multipath effects to be mitigated and reception quality to be improved.

A first aspect of the present invention provides a synchronization tracking apparatus comprising a replica generation section that performs multicarrier demodulation of a known signal of a received signal and generates a replica, a delay profile generation section that calculates a correlation value between the aforementioned replica and the aforementioned received signal and generates a delay profile, an integral value calculation section that integrates aforementioned correlation values for each fixed range of the aforementioned delay profile and calculates a plurality of integral values, a maximum integral value detection section that detects the maximum integral value which is the maximum value of the aforementioned integral values, and a demodulation timing detection section that detects the demodulation timing at which multicarrier demodulation is performed from the position of the aforementioned maximum integral value.

A second aspect of the present invention provides a synchronization tracking method comprising a replica generation step of performing multicarrier demodulation of a known signal of a received signal and generating a replica, a delay profile generation step of calculating a correlation value between the aforementioned replica and the aforementioned received signal and generating a delay profile, an integration step of integrating aforementioned correlation values for each fixed range of the aforementioned delay profile and calculating a plurality of integral values, a maximum integral value detection step of detecting the maximum integral value which is the maximum value of the aforementioned integral values, and a demodulation timing detection step of detecting the demodulation timing at which multicarrier demodulation is performed from the position of the aforementioned maximum integral value.

A third aspect of the present invention provides a synchronization tracking apparatus comprising a replica generation section that performs multicarrier demodulation of a known signal of a received signal and generates a replica, a delay profile generation section that calculates a correlation value between the aforementioned replica and the aforementioned received signal and generates a delay profile, an integral value calculation section that integrates aforementioned correlation values for each fixed range of the aforementioned delay profile and calculates a plurality of integral values, a maximum integral value detection section that detects the maximum integral value which is the maximum value of the aforementioned integral values, a first detection section that detects a first position at which the correlation value of the aforementioned delay profile from the aforementioned delay profile generation section first exceeds a threshold value from the start of the aforementioned delay profile in the aforementioned fixed range in which the aforementioned maximum integral value is calculated and generates first position information, a second detection section that detects a second position at which the correlation value of the aforementioned delay profile from the aforementioned delay profile generation section first exceeds the aforementioned threshold value from the end of the aforementioned delay profile in the aforementioned fixed range in which the aforementioned maximum integral value is calculated and generates second position information, an interval calculation section that calculates the interval from the aforementioned first position to the aforementioned second position based on the aforementioned first and second position information and generates interval information, and a demodulation timing detection section that detects demodulation timing based on the aforementioned interval information.

A fourth aspect of the present invention provides a synchronization tracking method comprising a replica generation step of performing multicarrier demodulation of a known signal of a received signal and generating a replica, a delay profile generation step of calculating a correlation value between the aforementioned replica and the aforementioned received signal and generating a delay profile, an integral value calculation step of having the aforementioned integral value calculation section integrate aforementioned correlation values for each fixed range of the aforementioned delay profile and calculate a plurality of integral values, a maximum integral value detection step of detecting the maximum integral value which is the maximum value of the aforementioned integral values, a first detection step of having the aforementioned first detection section detect a first position at which a correlation value of the aforementioned delay profile first exceeds a threshold value from the start of the aforementioned delay profile in the aforementioned fixed range in which the aforementioned maximum integral value is calculated and generate first position information, a second detection step of having the aforementioned second detection section detect a second position at which a correlation value of the aforementioned delay profile first exceeds the aforementioned threshold value from the end of the aforementioned delay profile in the aforementioned fixed range in which the aforementioned maximum integral value is calculated and generate second position information, an interval calculation step of calculating the interval from the aforementioned first position to the aforementioned second position based on the aforementioned first and second position information and generating and conveying to the aforementioned interval calculation section interval information, an interval determination step of determining whether an interval indicated by the aforementioned interval information is greater than or equal to a reference interval and generating a determination result, a threshold value changing step of changing and conveying to the aforementioned first and second detection sections the aforementioned threshold value when it is indicated by the aforementioned determination result in the aforementioned interval determination step that the aforementioned interval is greater than or equal to the aforementioned reference interval, and a demodulation timing detection step of receiving the aforementioned first position information when it is indicated by the aforementioned determination result in the aforementioned interval determination step that the aforementioned interval is not greater than or equal to the aforementioned reference interval and detecting demodulation timing based on the aforementioned first position of that first position information.

A fifth aspect of the present invention provides a synchronization tracking apparatus comprising a replica generation section that performs multicarrier demodulation of a known signal of a received signal and generates a replica, a delay profile generation section that calculates a correlation value between the aforementioned replica and the aforementioned received signal and generates a delay profile, an integral value calculation section that integrates aforementioned correlation values for each fixed range of the aforementioned delay profile and calculates a plurality of integral values, a maximum integral value detection section that detects the maximum integral value which is the maximum value of the aforementioned integral values, a maximum peak value detection section that detects the maximum peak value of correlation values in the aforementioned fixed range in which the aforementioned maximum integral value is calculated, a positive direction position detection section that detects a first position at which the aforementioned correlation value first exceeds a threshold value in the positive direction which is the direction in which time advances from the aforementioned maximum peak value in the aforementioned fixed range in which the aforementioned maximum integral value is calculated and generates first position information, a negative direction position detection section that detects a second position at which the aforementioned correlation value first exceeds the aforementioned threshold value in the negative direction which is the direction in which time is counted backward from the aforementioned maximum peak value in the aforementioned fixed range in which the aforementioned maximum integral value is calculated and generates second position information, an interval calculation section that calculates the interval from the aforementioned first position to the aforementioned second position based on the aforementioned first and second position information and generates interval information, and a demodulation timing detection section that detects demodulation timing based on the aforementioned interval information and the aforementioned second position information.

A sixth aspect of the present invention provides a synchronization tracking method comprising a replica generation step of performing multicarrier demodulation of a known signal of a received signal and generating a replica, a delay profile generation step of calculating a correlation value between the aforementioned replica and the aforementioned received signal and generating a delay profile, an integral value calculation step of integrating for each fixed range of the aforementioned delay profile and calculating a plurality of integral values, a maximum integral value detection step of detecting the maximum integral value which is the maximum value of the aforementioned integral values, a maximum peak value detection step of detecting the maximum peak value of the correlation values in the aforementioned fixed range in which the aforementioned maximum integral value is calculated, a positive direction position detection step of detecting a first position at which the aforementioned correlation value first exceeds a threshold value in the positive direction which is the direction in which time advances from the aforementioned maximum peak value in the aforementioned fixed range in which the aforementioned maximum integral value is calculated and generating first position information, a negative direction position detection step of detecting a second position at which the aforementioned correlation value first exceeds the aforementioned threshold value in the negative direction which is the direction in which time is counted backward from the aforementioned maximum peak value in the aforementioned fixed range in which the aforementioned maximum integral value is calculated and generating second position information, an interval calculation step of calculating the interval from the aforementioned first position to the aforementioned second position based on the aforementioned first and second position information and generating interval information, and a demodulation timing detection step of detecting demodulation timing based on the aforementioned interval information and the aforementioned second position information.

### Brief Description of Drawings

FIG.1 is a drawing for explaining a conventional synchronization tracking method;
FIG.2 is another drawing for explaining a conventional synchronization tracking method;
FIG.3 is another drawing for explaining a conventional synchronization tracking method;
FIG.4 is a block diagram showing the configuration of a synchronization tracking apparatus according to Embodiment 1 of the present invention;
FIG.5 is a flowchart for explaining the operation of a synchronization tracking apparatus according to Embodiment 1 of the present invention;
FIG.6 is a block diagram showing the configuration of a synchronization tracking apparatus according to Embodiment 2 of the present invention;
FIG.7 is a block diagram showing the configuration of a synchronization tracking apparatus according to Embodiment 3 of the present invention;
FIG.8 is a block diagram showing the configuration of a synchronization tracking apparatus according to Embodiment 4 of the present invention;
FIG.9 is a block diagram showing the configuration of a synchronization tracking apparatus according to Embodiment 5 of the present invention;
FIG. 10 is a block diagram showing the configuration of a synchronization tracking apparatus according to Embodiment 6 of the present invention;
FIG.11 is a block diagram showing the configuration of a synchronization tracking apparatus according to Embodiment 7 of the present invention;
FIG. 12 is a block diagram showing the configuration of a synchronization tracking apparatus according to Embodiment 8 of the present invention;
FIG.13 is a block diagram showing the configuration of a synchronization tracking apparatus according to Embodiment 9 of the present invention;
FIG.14 is a block diagram showing the configuration of a synchronization tracking apparatus according to Embodiment 10 of the present invention;
FIG.15 is a block diagram showing the configuration of a synchronization tracking apparatus according to Embodiment 11 of the present invention;
FIG.16 is a block diagram showing the configuration of a synchronization tracking apparatus according to Embodiment 12 of the present invention;
FIG.17 is a block diagram showing the configuration of a synchronization tracking apparatus according to Embodiment 13 of the present invention;
FIG.18 is a block diagram showing the configuration of a synchronization tracking apparatus according to Embodiment 14 of the present invention; and
FIG.19 is a block diagram showing the configuration of a synchronization tracking apparatus according to Embodiment 15 of the present invention.

### Best Mode for Carrying out the Invention

The gist of Embodiments 1 through 7 of the present invention is that received signal delay profile integration is performed for each fixed range and a plurality of integral values are calculated, the maximum integral value which is the maximum value of the aforementioned integral values is detected, and the demodulation timing at which multicarrier demodulation is performed is detected from the position of the aforementioned maximum integral value.

With reference now to the accompanying drawings, embodiments of the present invention will be explained in detail below.

### (Embodiment 1)

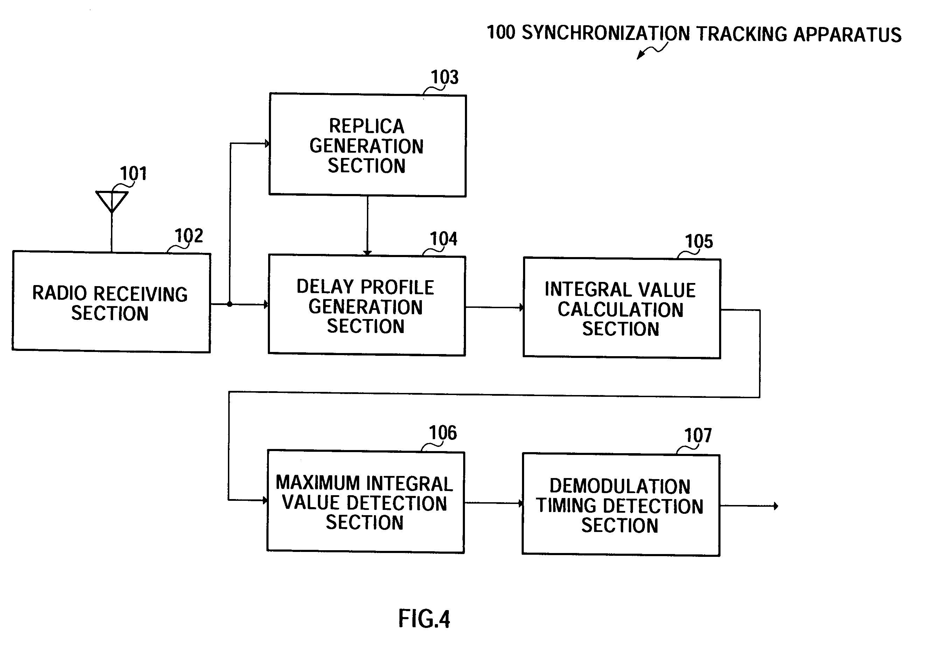

FIG.4 is a block diagram showing the configuration of a synchronization tracking apparatus according to Embodiment 1 of the present invention.

As shown in FIG.4, a synchronization tracking apparatus 100 according to Embodiment 1 of the present invention comprises an antenna 101, radio receiving section 102, replica generation section 103, delay profile generation section 104, integral value calculation section 105, maximum integral value detection section 106, and demodulation timing detection section 107.

The input terminal of radio receiving section 102 is connected to the output terminal of antenna 101. The input terminal of replica generation section 103 is connected to the output terminal of radio receiving section 102. An input terminal of delay profile generation section 104 is connected to the output terminal of replica generation section 103. The input terminal of integral value calculation section 105 is connected to the output terminal of delay profile generation section 104. The input terminal of maximum integral value detection section 106 is connected to the output terminal of integral value calculation section 105. The input terminal of demodulation timing detection section 107 is connected to the output terminal of maximum integral value detection section 106.

Antenna 101 receives a radio transmit signal transmitted from a transmitting apparatus (not shown), generates a received signal, and sends this received signal to radio receiving section 102. Radio receiving section 102 performs predetermined processing on the received signal from antenna 101, and sends the processed received signal to replica generation section 103 and delay profile generation section 104. Replica generation section 103 performs multicarrier demodulation of a known signal of the received signal from radio receiving section 102, generates a replica, and sends this replica to delay profile generation section 104. Delay profile generation section 104 calculates a correlation value between the replica from replica generation section 103 and the received signal, generates a delay profile, and sends this delay profile to integral value calculation section 105.

Integral value calculation section 105 integrates a delay profile from delay profile generation section 104 for each fixed range, calculates a plurality of integral values, and sends these integral values to maximum integral value detection section 106. That is to say, integral value calculation section 105 shifts a certain fixed range (several samples) at a time from the start of the delay profile, integrates the respective correlation values, and calculates a plurality of integral values.

Maximum integral value detection section 106 detects the maximum integral value, which is the maximum value of integral values from integral value calculation section 105, and sends this maximum integral value to demodulation timing detection section 107. Demodulation timing detection section 107 detects the demodulation timing at which multicarrier demodulation is performed from the position of the maximum integral value from maximum integral value detection section 106.

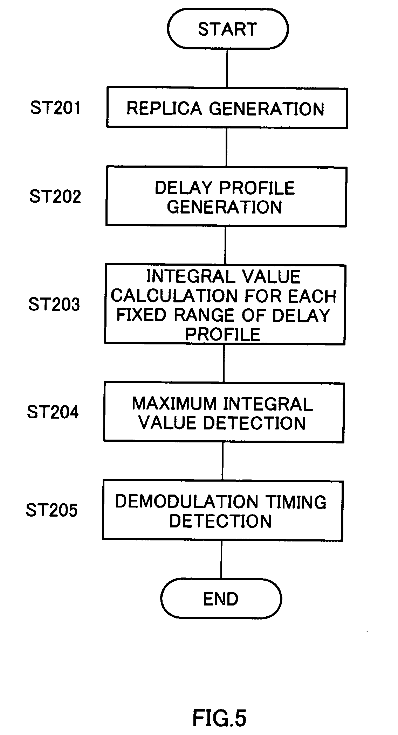

Next, the operation of a synchronization tracking apparatus according to Embodiment 1 of the present invention will be described with reference to FIG.4 and FIG.5. FIG.5 is a flowchart for explaining the operation of a synchronization tracking apparatus according to Embodiment 1 of the present invention.

As shown in FIG.5, in step ST201, replica generation section 103 performs multicarrier demodulation of a known signal of a received signal and generates a replica. Then delay profile generation section 104 calculates a correlation value between the replica from replica generation section 103 and the received signal, and generates a delay profile (step ST202).

Next, integral value calculation section 105 performs delay profile integration for each fixed range and calculates a plurality of integral values (step ST203). Following this, maximum integral value detection section 106 detects the maximum integral value, which is the maximum value of the plurality of integral values (step ST204). Then demodulation timing detection section 107 detects the demodulation timing at which multicarrier demodulation is performed from the position of the maximum integral value (step ST205).

Thus, according to Embodiment 1 of the present invention, received signal delay profile integration is performed for each fixed range and a plurality of integral values are calculated, the maximum integral value, which is the maximum value of the aforementioned integral values, is detected, and the demodulation timing at which multicarrier demodulation is performed is detected from the position of the aforementioned maximum integral value, so that when the delay profile peak value and path group positions are widely separated on the time axis, since the integral value of correlation values of the fixed range in which the correlation value peak value is located is small, the path signal of this correlation value peak value can be eliminated and demodulation timing can be detected, and the demodulation timing at which there is the least effect on reception quality can be detected, enabling multipath effects to be mitigated and reception quality to be improved.

### (Embodiment 2)

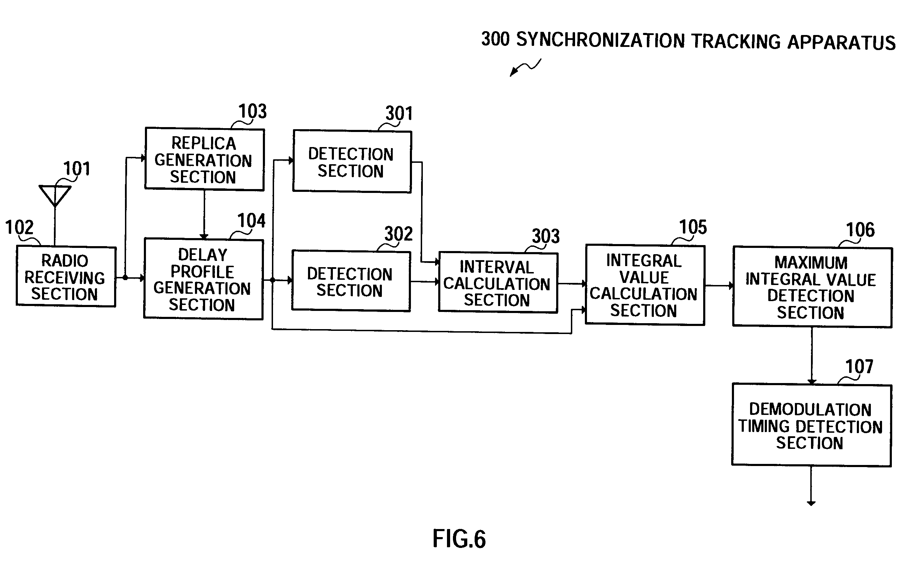

Embodiment 2 of the present invention will now be explained in detail with reference to the accompanying drawings. FIG.6 is a block diagram showing the configuration of a synchronization tracking apparatus according to Embodiment 2 of the present invention. Configuration elements in Embodiment 2 of the present invention identical to those of Embodiment 1 of the present invention are assigned the same reference codes as in Embodiment 1, and descriptions thereof are omitted.

As shown in FIG.6, in a synchronization tracking apparatus 300 according to Embodiment 2 of the present invention, detection sections 301 and 302, and an interval calculation section 303, have been added to synchronization tracking apparatus 100 according to Embodiment 1 of the present invention. That is to say, synchronization tracking apparatus 300 according to Embodiment 2 of the present invention comprises an antenna 101, radio receiving section 102, detection sections 301 and 302, interval calculation section 303, replica generation section 103, delay profile generation section 104, integral value calculation section 105, maximum integral value detection section 106, and demodulation timing detection section 107.

The input terminals of detection sections 301 and 302 are connected to the output terminal of delay profile generation section 104. The input terminals of interval calculation section 303 are connected to the output terminals of detection sections 301 and 302. The output terminals of delay profile generation section 104 and interval calculation section 303 are connected to the input terminals of integral value calculation section 105.

Operations of synchronization tracking apparatus 300 according to Embodiment 2 of the present invention that differ from those of Embodiment 1 of the present invention will now be described.

Detection section 301 detects a position at which a correlation value of a delay profile from delay profile generation section 104 first exceeds a threshold value from the start of the delay profile, generates first position information, and sends this first position information to interval calculation section 303. Also, detection section 302 detects a second position at which a correlation value of a delay profile from delay profile generation section 104 first exceeds the aforementioned threshold value from the end of the delay profile, generates second position information, and sends this second position information to interval calculation section 303.

Based on the first and second position information from detection sections 301 and 302, interval calculation section 303 calculates the interval from the first position to the second position, generates interval information, and sends this interval information to integral value calculation section 105. Integral value calculation section 105 integrates a delay profile from delay profile generation section 104 for each fixed range within the interval indicated by interval information from interval calculation section 303, calculates a plurality of integral values, and sends these integral values to maximum integral value detection section 106.

Thus, according to Embodiment 2 of the present invention, in addition to obtaining the effect of Embodiment 1 of the present invention, demodulation timing is calculated by calculating correlation value integral values of only an interval for which a delay profile correlation value is greater than or equal to a threshold value, thereby enabling the amount of computation to be reduced.

### (Embodiment 3)

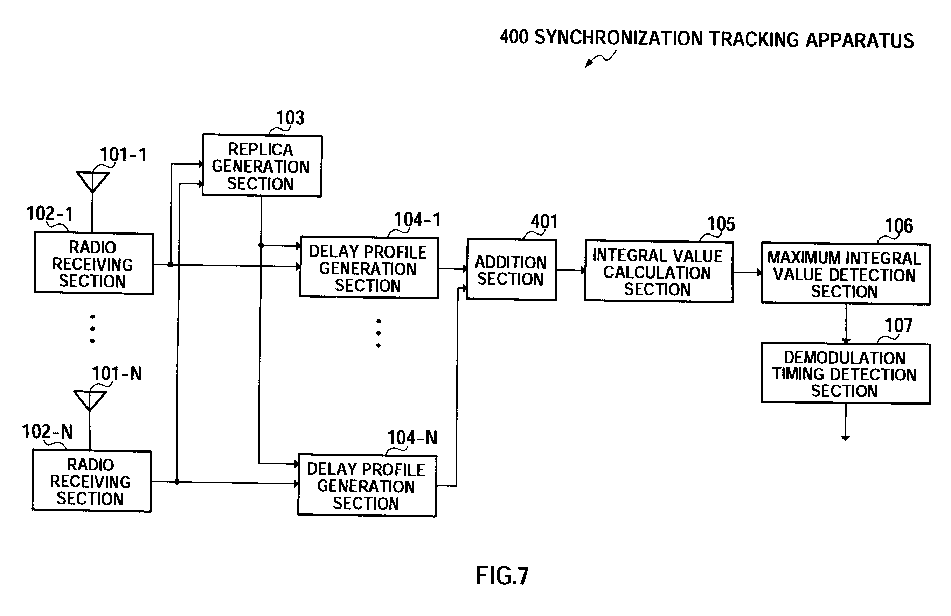

Embodiment 3 of the present invention will now be explained in detail with reference to the accompanying drawings. FIG.7 is a block diagram showing the configuration of a synchronization tracking apparatus according to Embodiment 3 of the present invention. Configuration elements in Embodiment 3 of the present invention identical to those of Embodiment 1 of the present invention are assigned the same reference codes as in Embodiment 1, and descriptions thereof are omitted.

As shown in FIG.7, in a synchronization tracking apparatus 400 according to Embodiment 3 of the present invention, a plurality of antennas 101-1 through 101-N, radio receiving sections 102-1 through 102-N, delay profile generation sections 104-1 through 104-N, and an addition section 401, are provided instead of antenna 101, radio receiving section 102, and delay profile generation section 104 of synchronization tracking apparatus 100 according to Embodiment 1 of the present invention.

That is to say, synchronization tracking apparatus 400 according to Embodiment 3 of the present invention comprises plurality of antennas 101-1 through 101-N, radio receiving sections 102-1 through 102-N, delay profile gene ration sections 104-1 through 104-N, addition section 401, replica generation section 103, integral value calculation section 105, maximum integral value detection section 106, and demodulation timing detection section 107.

The input terminals of radio receiving sections 102-1 through 102-N are connected to the output terminals of antennas 101-1 through 101-N. The input terminals of replica generation section 103 are connected to the output terminals of radio receiving sections 102-1 through 102-N. The input terminals of delay profile generation sections 104-1 through 104-N are connected to the output terminals of radio receiving sections 102-1 through 102-N and replica generation section 103. The input terminals of addition section 401 are connected to the output terminals of delay profile generation sections 104-1 through 104-N.

Operations of synchronization tracking apparatus 400 according to Embodiment 3 of the present invention that differ from those of Embodiment 1 of the present invention will now be described.

Antennas 101-1 through 101-N receive a plurality of radio transmit signals transmitted from a transmitting apparatus (not shown), generate received signals, and send these received signals to radio receiving sections 102-1 through 102-N. Radio receiving sections 102-1 through 102-N perform predetermined processing on the plurality of received signals from antennas 101-1 through 101-N, and send the processed plurality of received signals to replica generation section 103 and delay profile generation sections 104-1 through 104-N. Replica generation section 103 performs multicarrier demodulation of a known signal of the plurality of received signals from radio receiving sections 102-1 through 102-N, generates a replica, and sends this replica to delay profile generation sections 104-1 through 104-N. Delay profile generation sections 104-1 through 104-N calculate correlation values between the replica from replica generation section 103 and the plurality of received signals, generate a plurality of delay profiles, and send these delay profiles to addition section 401. Addition section 401 adds the plurality of delay profiles from delay profile generation sections 104-1 through 104-N and sends the result to integral value calculation section 105.

Thus, according to Embodiment 3 of the present invention, in addition to obtaining the effect of Embodiment 1 of the present invention, a plurality of delay profiles are generated based on a plurality of received signals, these delay profiles are added, the added delay profile is integrated for each fixed range and a plurality of integral values are calculated, the maximum integral value, which is the maximum value of the aforementioned integral values, is detected, and the demodulation timing at which multicarrier demodulation is performed is detected from the position of the aforementioned maximum integral value, thereby enabling stable demodulation timing to be detected.

### (Embodiment 4)

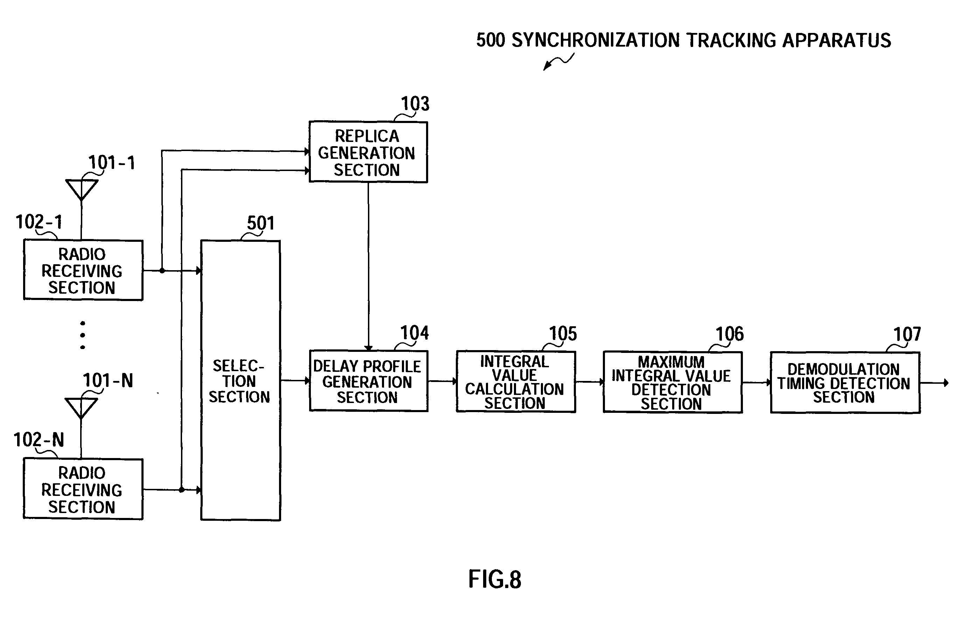

Embodiment 4 of the present invention will now be explained in detail with reference to the accompanying drawings. FIG.8 is a block diagram showing the configuration of a synchronization tracking apparatus according to Embodiment 4 of the present invention. Configuration elements in Embodiment 4 of the present invention identical to those of Embodiment 1 of the present invention are assigned the same reference codes as in Embodiment 1, and descriptions thereof are omitted.

As shown in FIG.8, in a synchronization tracking apparatus 500 according to Embodiment 4 of the present invention, plurality of antennas 101-1 through 101-N, radio receiving sections 102-1 through 102-N, and a selection section 501, are provided instead of antenna 101 and radio receiving section 102 of synchronization tracking apparatus 100 according to Embodiment 1 of the present invention.

That is to say, synchronization tracking apparatus 500 according to Embodiment 4 of the present invention comprises plurality of antennas 101-1 through 101-N, radio receiving sections 102-1 through 102-N, selection section 501, replica generation section 103, delay profile generation section 104, integral value calculationsection105,maximumintegralvaluedetection section 106, and demodulation timing detection section 107.

The input terminals of radio receiving sections 102-1 through 102-N are connected to the output terminals of antennas 101-1 through 101-N. The input terminals of replica generation section 103 are connected to the output terminals of radio receiving sections 102-1 through 102-N. The input terminals of selection section 501 are connected to the output terminals of radio receiving sections 102-1 through 102-N. The input terminals of delay profile generation section 104 are connected to the output terminals of selection section 501 and replica generation section 103.

Operations of synchronization tracking apparatus 500 according to Embodiment 4 of the present invention that differ from those of Embodiment 1 of the present invention will now be described.

Antennas 101-1 through 101-N receive a plurality of radio transmit signals transmitted from a transmitting apparatus (not shown), generate received signals, and send these received signals to radio receiving sections 102-1 through 102-N. Radio receiving sections 102-1 through 102-N perform predetermined processing on the plurality of received signals from antennas 101-1 through 101-N, and send the processed plurality of received signals to replica generation section 103 and selection section 501. Replica generation section 103 performs multicarrier demodulation of a known signal of the plurality of received signals from radio receiving sections 102-1 through 102-N, generates a replica, and sends this replica to delay profile generation section 104. Selection section 501 selects the received signal with the best reception quality from the plurality of received signals from radio receiving sections 102-1 through 102-N, and sends this received signal to delay profile generation section 104. Delay profile generation section 104 calculates a correlation value between the replica from replica generation section 103 and the received signal from selection section 501, and generates a delay profile.

Thus, according to Embodiment 4 of the present invention, in addition to obtaining the effect of Embodiment 1 of the present invention, a delay profile is generated based on the received signal with the best reception quality among a plurality of received signals, this delay profile is integrated for each fixed range and a plurality of integral values are calculated, the maximum integral value, which is the maximum value of the aforementioned integral values, is detected, and the demodulation timing at which multicarrier demodulation is performed is detected from the position of the aforementioned maximum integral value, thereby enabling highly precise demodulation timing to be detected.

### (Embodiment 5)

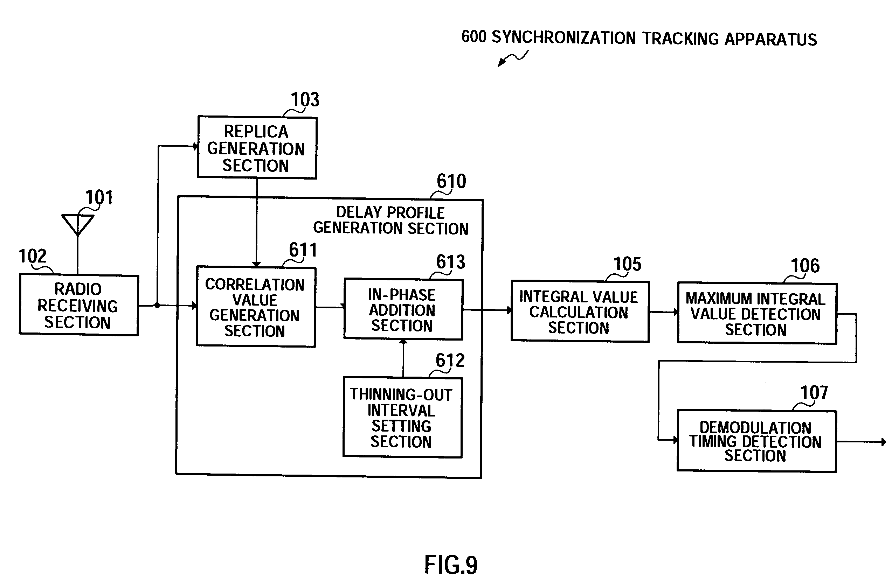

Embodiment 5 of the present invention will now be explained in detail with reference to the accompanying drawings. FIG.9 is a block diagram showing the configuration of a synchronization tracking apparatus according to Embodiment 5 of the present invention. Configuration elements in Embodiment 5 of the present invention identical to those of Embodiment 1 of the present invention are assigned the same reference codes as in Embodiment 1, and descriptions thereof are omitted.

As shown in FIG.9, in a synchronization tracking apparatus 600 according to Embodiment 5 of the present invention, a delay profile generation section 610 is provided instead of delay profile generation section 104 of synchronization tracking apparatus 100 according to Embodiment 1 of the present invention. That is to say, synchronization tracking apparatus 600 according to Embodiment 5 of the present invention comprises antenna 101, radio receiving section 102, replica generation section 103, delay profile generation section 610, integral value calculation section 105, maximum integral value detection section 106, and demodulation timing detection section 107.

Delay profile generation section 610 comprises a correlation value generation section 611, thinning-out interval setting section 612, and in-phase addition section 613. An input terminal of correlation value generation section 611 is connected to the output terminal of radio receiving section 102. The input terminals of in-phase addition section 613 are connected to the output terminals of correlation value generation section 611 and thinning-out interval setting section 612. The output terminal of in-phase addition section 613 is connected to the input terminal of integral value calculation section 105.

Operations of synchronization tracking apparatus 600 according to Embodiment 5 of the present invention that differ from those of Embodiment 1 of the present invention will now be described.

Correlation value generation section 611 calculates a correlation value between a replica from replica generation section 103 and a received signal from radio receiving section 102, and sends this correlation value to in-phase addition section 613. Thinning-out interval setting section 612 sets a thinning-out interval and conveys this thinning-out interval to in-phase addition section 613. When performing in-phase addition of correlation values from correlation value generation section 611, in-phase addition section 613 thins out correlation values based on the thinning-out interval from thinning-out interval setting section 612 and performs in-phase addition, generates a correlation value, and sends this correlation value to integral value calculation section 105.

Thus, according to Embodiment 5 of the present invention, in addition to obtaining the effect of Embodiment 1 of the present invention, when performing in-phase addition of delay profile correlation values, correlation values are thinned out based on a predetermined thinning-out interval in performing in-phase addition, a correlation value is generated, a delay profile is integrated for each fixed range and a plurality of integral values are calculated, the maximum integral value, which is the maximum value of the aforementioned integral values, is detected, and the demodulation timing at which multicarrier demodulation is performed is detected from the position of the aforementioned maximum integral value, thereby enabling the amount of computation to be reduced.

### (Embodiment 6)

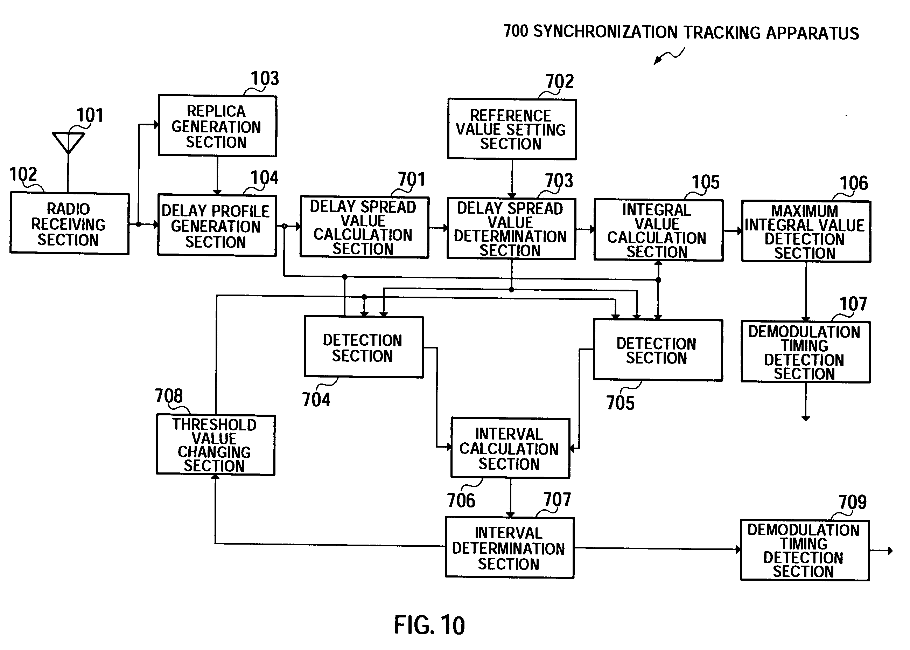

Embodiment 6 of the present invention will now be explained in detail with reference to the accompanying drawings. FIG.10 is a block diagram showing the configuration of a synchronization tracking apparatus according to Embodiment 6 of the present invention. Configuration elements in Embodiment 6 of the present invention identical to those of Embodiment 1 of the present invention are assigned the same reference codes as in Embodiment 1, and descriptions thereof are omitted.

As shown in FIG.10, a synchronization tracking apparatus 700 according to Embodiment 6 of the present invention comprises antenna 101, radio receiving section 102, replica generation section 103, delay profile generation section 104, integral value calculation section 105, maximum integral value detection section 106, demodulation timing detection section 107, a delay spread value calculation section 701, reference value setting section 702, delay spread value determination section 703, detection sections 704 and 705, an interval calculation section 706, interval determination section 707, threshold value changing section 708, and demodulation timing detection section 709.

The input terminal of radio receiving section 102 is connected to the output terminal of antenna 101. The input terminal of replica generation section 103 is connected to the output terminal of radio receiving section 102. An input terminal of delay profile generation section 104 is connected to the output terminal of replica generation section 103. An input terminal of integral value calculation section 105 is connected to the output terminal of delay profile generation section 104. The input terminal of maximum integral value detection section 106 is connected to the output terminal of integral value calculation section 105. The input terminal of demodulation timing detection section 107 is connected to the output terminal of maximum integral value detection section 106.

The input terminal of delay spread value calculation section 701 is connected to the output terminal of delay profile generation section 104. Input terminals of delay spread value determination section 703 are connected to the output terminals of delay spread value calculation section 701 and reference value setting section 702. Input terminals of integral value calculation section 105, and detection sections 704 and 705, are connected to an output terminal of delay spread value determination section 703. Input terminals of detection sections 704 and 705 are connected to the output terminal of delay profile generation section 104. The input terminals of interval calculation section 706 are connected to the output terminals of detection sections 704 and 705. The input terminal of interval determination section 707 is connected to the output terminal of interval calculation section 706. The input terminal of threshold value changing section 708 is connected to an output terminal of interval determination section 707. The output terminal of threshold value changing section 708 is connected to input terminals of detection sections 704 and 705. The input terminal of demodulation timing detection section 709 is connected to an output terminal of interval determination section 707.

Operations of synchronization tracking apparatus 700 according to Embodiment 6 of the present invention that differ from those of Embodiment 1 of the present invention will now be described.

Delay spread value calculation section 701 receives a delay profile from delay profile generation section 104, generates a delay spread value indicating the spread of the delay profile correlation values, and sends this delay spread value to delay spread value determination section 703. Reference value setting section 702 sets a delay spread value reference value, and sends this reference value to delay spread value determination section 703. Delay spread value determination section 703 determines whether a delay spread value from delay spread value calculation section 701 is greater than or equal to the reference value, generates a determination result, and sends this determination result to integral value calculation section 105 and detection sections 704 and 705.

When it is indicated by the determination result from delay spread value determination section 703 that the delay spread value is greater than or equal to the reference value, integral value calculation section 105 integrates the delay profile from delay profile generation section 104 for each fixed range, calculates a plurality of integral values, and sends these integral values to maximum integral value detection section 106.

When it is indicated by the determination result from delay spread value determination section 703 that the delay spread value is not greater than or equal to the reference value, detection section 704 detects a position at which a correlation value of a delay profile from delay profile generation section 104 first exceeds a threshold value from the start of the delay profile, generates first position information, and sends this first position information to interval calculation section 706. Also, when it is indicated by the determination result from delay spread value determination section 703 that the delay spread value is not greater than or equal to the reference value, detection section 705 detects a second position at which a correlation value of a delay profile from delay profile generation section 104 first exceeds the aforementioned threshold value from the end of the delay profile, generates second position information, and sends this second position information to interval calculation section 706.

Based on the first and second position information from detection sections 704 and 705, interval calculation section 706 calculates the interval from the first position to the second position, generates interval information, and sends this interval information to interval determination section 707. Interval determination section 707 determines whether the interval indicated by the aforementioned interval information is greater than or equal to a reference interval, generates a determination result, and sends this determination result to threshold value changing section 708 and demodulation timing detection section 709.

When it is indicated by the determination result from interval determination section 707 that the interval is greater than or equal to the reference interval, threshold value changing section 708 changes the threshold value - that is, re-sets the threshold value - and sends the re-set threshold value to detection sections 704 and 705. When it is indicated by the determinationresultfromintervaldeterminationsection 707 that the interval is not greater than or equal to the reference interval, demodulation timing detection section 709 receives the aforementioned first position information from interval determination section 707 and detects the demodulation timing based on the aforementioned first position of that first position information. Thus, according to Embodiment 6 of the present invention, in addition to obtaining the effect of Embodiment 1 of the present invention, the demodulation timing detection operation can be changed according to a delay profile delay spread value, enabling demodulation timing to be detected accurately.

### (Embodiment 7)

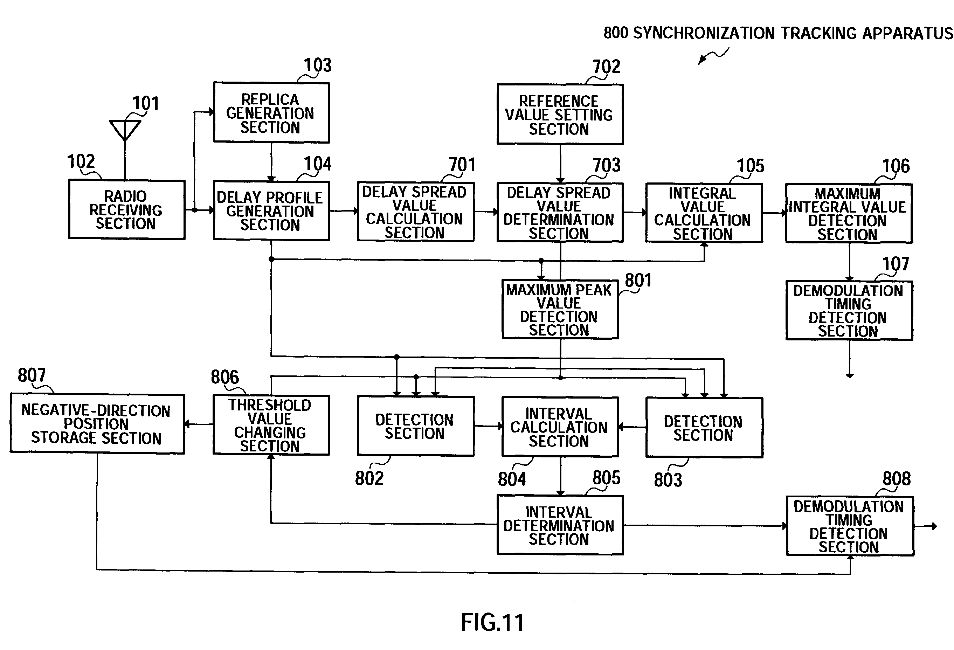

Embodiment 7 of the present invention will now be explained in detail with reference to the accompanying drawings. FIG.11 is a block diagram showing the configuration of a synchronization tracking apparatus according to Embodiment 7 of the present invention. Configuration elements in Embodiment 7 of the present invention identical to those of Embodiment 6 of the present invention are assigned the same reference codes as in Embodiment 6, and descriptions thereof are omitted.

As shown in FIG.11, a synchronization tracking apparatus 800 according to Embodiment 7 of the present invention comprises antenna 101, radio receiving section 102, replica generation section 103, delay profile generation section 104, integral value calculation section 105, maximum integral value detection section 106, demodulation timing detection section 107, delay spread value calculation section 701, reference value setting section 702, delay spread value determination section 703, a maximum peak value detection section 801, detection sections 802 and 803, an interval calculation section 804, interval determination section 805, threshold value changing section 806, negative direction position storage section 807, and demodulation timing detection section 808.

Input terminals of maximum peak value detection section 801 and detection sections 802 and 803 are connected to an output terminal of delay spread value determination section 703. Input terminals of detection sections 802 and 803 are connected to an output terminal of delay profile generation section 104. Input terminals of interval calculation section 804 are connected to output terminals of detection sections 802 and 803. The input terminal of interval determination section 805 is connected to the output terminal of interval calculation section 804. The input terminal of threshold value changing section 806 is connected to the output terminal of interval determination section 805. An output terminal of threshold value changing section 806 is connected to input terminals of detection sections 802 and 803. The input terminal of negative direction position storage section 807 is connected to an output terminal of threshold value changing section 806. Input terminals of demodulation timing detection section 808 are connected to the output terminals of interval determination section 805 and negative direction position storage section 807.

Operations of synchronization tracking apparatus 800 according to Embodiment 7 of the present invention that differ from those of Embodiment 6 of the present invention will now be described.

When it is indicated by a determination result from delay spread value determination section 703 that the delay spread value is not greater than or equal to a reference value, maximum peak value detection section 801 detects the maximum peak value of delay profile correlation values from delay profile generation section 104, and sends this maximum peak value to detection sections 802 and 803.

Detection section 802 generates third position information indicating a third position at which a correlation value of a delay profile from delay profile generation section 104 is first greater than or equal to a threshold value in the positive direction, which is the direction in which time advances from the maximum peak value, and sends this third position information to interval calculation section 804. Detection section 803 generates fourth position information indicating a fourth position at which a correlation value of a delay profile from delay profile generation section 104 is first greater than or equal to a threshold value in the negative direction, which is the direction in which time is counted backward from the maximum peak value, and sends this fourth position information to interval calculation section 804.

Based on the third and fourth position information from detection sections 802 and 803, interval calculation section 804 calculates the interval from the third position to the fourth position, generates interval information, and sends this interval information to interval determination section 805. Interval determination section 805 receives the third and fourth position information and interval information from interval calculation section 804, determines whether the interval indicated by the aforementioned interval information is greater than or equal to a reference interval, generates a determination result, and sends this determination result to threshold value changing section 806 and demodulation timing detection section 808.

When it is indicated by the determination result from interval determination section 805 that the interval is not greater than or equal to the reference interval, threshold value changing section 806 changes the threshold value - that is, re-sets the threshold value - and sends the re-set threshold value to detection sections 802 and 803, and also sends the fourth position information to negative direction position storage section 807 and stores the fourth position information therein. Also, threshold value changing section 806 receives a determination result from interval determination section 805 and sends this determination result to demodulation timing detection section 808. At the time at which a change is made from when it is indicated by the aforementioned determination result from interval determination section 805 that the aforementioned interval is not greater than or equal to the aforementioned reference interval to when it is indicated that the aforementioned interval is greater than or equal to the aforementioned reference interval, demodulation timing detection section 808 reads the fourth position information stored previously in negative direction position storage section 807, and detects the demodulation timing based on the aforementioned fourth position of that fourth position information.

Thus, according to Embodiment 7 of the present invention, in addition to obtaining the effect of Embodiment 1 of the present invention, the demodulation timing detection operation can be changed according to a delay profile delay spread value, enabling demodulation timing to be detected accurately.

The gist of Embodiments 8 through 11 of the present invention is that aforementioned correlation value integration is performed for each fixed range of a delay profile of a received signal and a plurality of integral values are calculated, the maximum integral value which is the maximum value of the aforementioned integral values is detected, a first position at which an aforementioned delay profile correlation value first exceeds a threshold value from the start of the aforementioned delay profile and a second position at which an aforementioned delay profile correlation value first exceeds the aforementioned threshold value from the end of the aforementioned delay profile are detected in the aforementioned fixed range in which the aforementioned maximum integral value is calculated, the interval from the aforementioned first position to the aforementioned second position is calculated and interval information is generated, and demodulation timing is detected based on this interval information.

### (Embodiment 8)

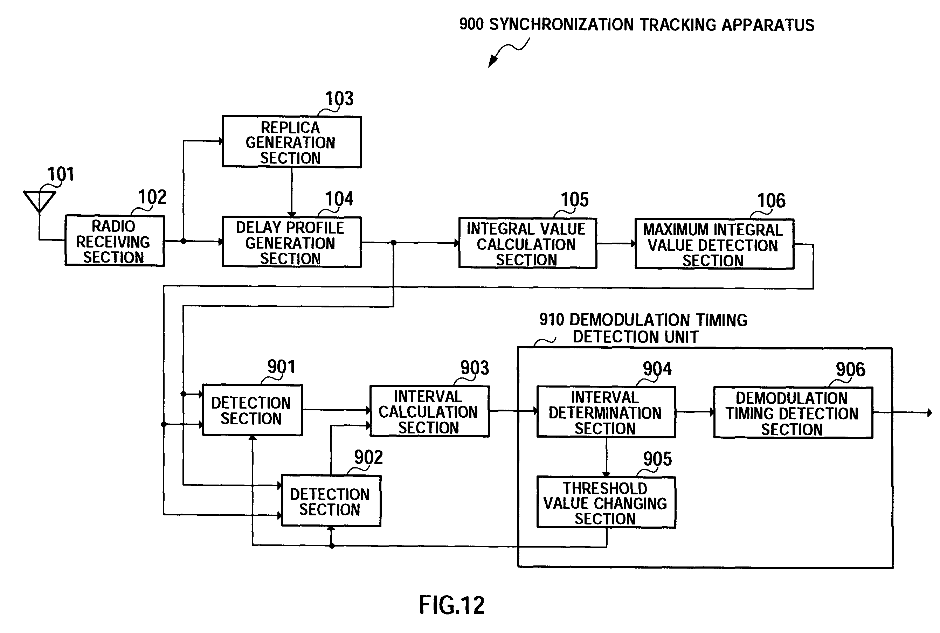

FIG.12 is a block diagram showing the configuration of a synchronization tracking apparatus according to Embodiment 8 of the present invention.

As shown in FIG.12, a synchronization tracking apparatus 900 according to Embodiment 8 of the present invention comprises antenna 101, radio receiving section 102, replica generation section 103, delay profile generation section 104, integral value calculation section 105, maximum integral value detection section 106, detection sections 901 and 902, interval calculation section 903, interval determination section 904, threshold value changing section 905, and demodulation timing detection section 906.

The input terminal of radio receiving section 102 is connected to the output terminal of antenna 101. The input terminal of replica generation section 103 is connected to the output terminal of radio receiving section 102. An input terminal of delay profile generation section 104 is connected to the output terminal of replica generation section 103. The input terminal of integral value calculation section 105 is connected to the output terminal of delay profile generation section 104. The input terminal of maximum integral value detection section 106 is connected to the output terminal of integral value calculation section 105. Input terminals of detection sections 901 and 902 are connected to the output terminals of delay profile generation section 104 and maximum integral value detection section 106. The input terminals of interval calculation section 903 are connected to the output terminals of detection sections 901 and 902. The input terminal of interval determination section 904 is connected to the output terminal of interval calculation section 903. The input terminal of threshold value changing section 905 is connected to an output terminal of interval determination section 904. The output terminal of threshold value changing section 905 is connected to input terminals of detection sections 901 and 902. The input terminal of demodulation timing detection section 906 is connected to an output terminal of interval determination section 904.

Antenna 101 receives a radio transmit signal transmitted from a transmitting apparatus (not shown), generates a received signal, and sends this received signal to radio receiving section 102. Radio receiving section 102 performs predetermined processing on the received signal from antenna 101, and sends the processed received signal to replica generation section 103 and delay profile generation section 104. Replica generation section 103 performs multicarrier demodulation of a known signal of the received signal from radio receiving section 102, generates a replica, and sends this replica to delayprofile generation section 104. Delay profile generation section 104 calculates a correlation value between the replica from replica generation section 103 and the received signal, generates a delay profile, and sends this delay profile to integral value calculation section 105.

Integral value calculation section 105 integrates a delay profile from delay profile generation section 104 for each fixed range, calculates a plurality of integral values, and sends these integral values to maximum integral value detection section 106. That is to say, integral value calculation section 105 shifts a certain fixed range (several samples) at a time from the start of the delay profile, integrates the respective correlation values, and calculates a plurality of integral values.

Maximum integral value detection section 106 detects the maximum integral value, which is the maximum value of integral values from integral value calculation section 105, and sends this maximum integral value to detection sections 901 and 902.

Detection section 901 detects a first position at which a correlation value of a delay profile from delay profile generation section 104 first exceeds a threshold value from the start of the delay profile in the aforementioned fixed range in which the maximum integral value from maximum integral value detection section 106 is calculated, generates first position information, and sends this first position information to interval calculation section 903. Also, detection section 902 detects a second position at which a correlation value of a delay profile from delay profile generation section 104 first exceeds the aforementioned threshold value from the end of the delay profile in the aforementioned fixed range in which the maximum integral value from maximum integral value detection section 106 is calculated, generates second position information, and sends this second position information to interval calculation section 903.

Based on the first and second position information from detection sections 901 and 902, interval calculation section 903 calculates the interval from the first position to the second position, generates interval information, and sends this interval information together with the first and second position information to interval determination section 904. Interval determination section 904 determines whether the interval indicated by the aforementioned interval information is greater than or equal to a reference interval, generates a determination result, and sends this determination result to threshold value changing section 905 and demodulation timing detection section 906.

When it is indicated by the determination result from interval determination section 904 that the interval is greater than or equal to the reference interval, threshold value changing section 905 changes the threshold value - that is, re-sets the threshold value - and sends the re-set threshold value to detection sections 901 and 902. When it is indicated by the determinationresultfromintervaldeterminationsection 904 that the interval is not greater than or equal to the reference interval, demodulation timing detection section 906 receives the aforementioned first position information from interval determination section 904 and detects the demodulation timing based on the aforementioned first position of that first position information. The combination of interval determination section 904, threshold value changing section 905, and demodulation timing detection section 906, makes up a demodulation timing detection unit 910 that detects the demodulation timing based on the aforementioned interval information.

Thus, according to Embodiment 8 of the present invention, received signal delay profile integration is performed for each fixed range and a plurality of integral values are calculated, the maximum integral value, which is the maximum value of the aforementioned integral values, is detected, and the demodulation timing at which multicarrier demodulation is performed is detected from the position of the aforementioned maximum integral value, so that when the delay profile peak value and path group positions are widely separated on the time axis, since the integral value of correlation values of the fixed range in which the correlation value peak value is located is small, the path signal of this correlation value peak value can be eliminated and demodulation timing can be detected, and the demodulation timing at which there is the least effect on reception quality can be detected, enabling multipath effects to be mitigated and reception quality to be improved.

Also, according to Embodiment 8 of the present invention, a first position at which a delay profile correlation value first exceeds a threshold value from the start of the aforementioned delay profile and a second position at which an aforementioned correlation value first exceeds the aforementioned threshold value from the end of the aforementioned delay profile are detected in the aforementioned fixed range in which the maximum integral value is calculated, the interval from the aforementioned first position to the aforementioned second position is calculated based on the aforementioned first and second position information and interval information is generated, and demodulation timing can be detected based on this interval information, thereby enabling demodulation timing to be detected accurately in any kind of multipath environment.

### (Embodiment 9)

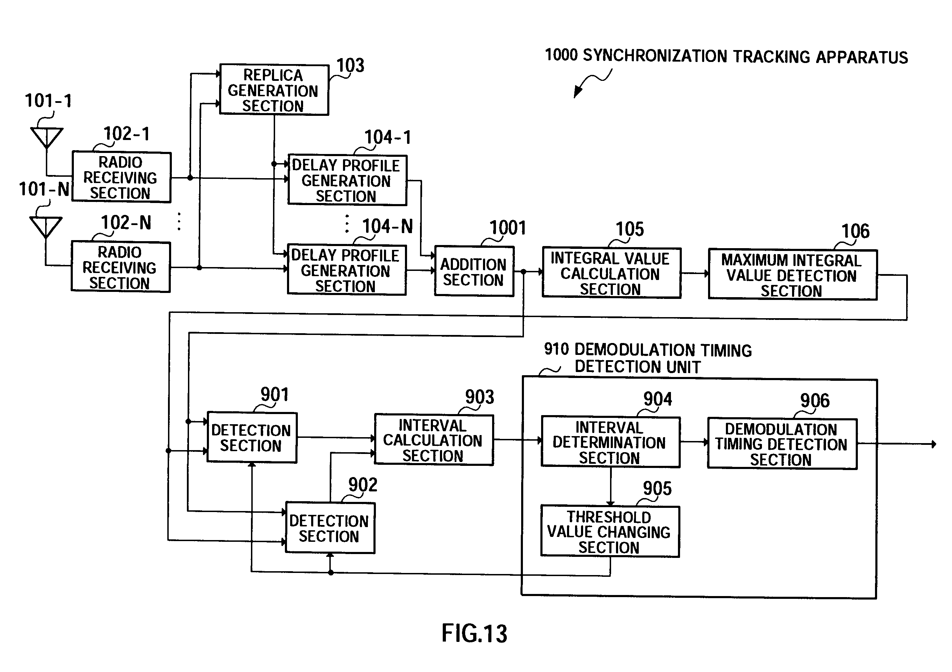

Embodiment 9 of the present invention will now be explained in detail with reference to the accompanying drawings. FIG.13 is a block diagram showing the configuration of a synchronization tracking apparatus according to Embodiment 9 of the present invention. Configuration elements in Embodiment 9 of the present invention identical to those of Embodiment 8 of the present invention are assigned the same reference codes as in Embodiment 8, and descriptions thereof are omitted.

As shown in FIG.13, in a synchronization tracking apparatus 1000 according to Embodiment 9 of the present invention, a plurality of antennas 101-1 through 101-N, radio receiving sections 102-1 through 102-N, delay profile generation sections 104-1 through 104-N, and an addition section 1001, are provided instead of antenna 101, radio receiving section 102, and delay profile generation section 104 of synchronization tracking apparatus 900 according to Embodiment 8 of the present invention.

That is to say, synchronization tracking apparatus 1000 according to Embodiment 9 of the present invention comprises plurality of antennas 101-1 through 101-N, radio receiving sections 102-1 through 102-N, delay profile generation sections 104-1 through 104-N, addition section 1001, replica generation section 103, integral value calculation section 105, maximum integral value detection section 106, detection sections 901 and 902, interval calculation section 903, interval determination section 904, threshold value changing section 905, and demodulation timing detection section 906.

The input terminals of radio receiving sections 102-1 through 102-N are connected to the output terminals of antennas 101-1 through 101-N. The input terminals of replica generation section 103 are connected to the output terminals of radio receiving sections 102-1 through 102-N. The input terminals of delay profile generation sections 104-1 through 104-N are connected to the output terminals of radio receiving sections 102-1 through 102-N and replica generation section 103. The input terminals of addition section 1001 are connected to the output terminals of delay profile generation sections 104-1 through 104-N.

Operations of synchronization tracking apparatus 1000 according to Embodiment 9 of the present invention that differ from those of Embodiment 8 of the present invention will now be described.

Antennas 101-1 through 101-N receive a plurality of radio transmit signals transmitted from a transmitting apparatus (not shown), generate received signals, and send these received signals to radio receiving sections 102-1 through 102-N. Radio receiving sections 102-1 through 102-N perform predetermined processing on the plurality of received signals from antennas 101-1 through 101-N, and send the processed plurality of received signals to replica generation section 103 and delay profile generation sections 104-1 through 104-N. Replica generation section 103 performs multicarrier demodulation of a known signal of the plurality of received signals from radio receiving sections 102-1 through 102-N, generates a replica, and sends this replica to delay profile generation sections 104-1 through 104-N. Delay profile generation sections 104-1 through 104-N calculate correlation values between the replica from replica generation section 103 and the plurality of received signals, generate a plurality of delay profiles, and send these delay profiles to addition section 1001. Addition section 1001 adds the plurality of delay profiles from delay profile generation sections 104-1 through 104-N and sends the result to integral value calculation section 105.

Thus, according to Embodiment 9 of the present invention, in addition to obtaining the effect of Embodiment 8 of the present invention, a plurality of delay profiles are generated based on a plurality of received signals, these delay profiles are added, the added delay profile is integrated for each fixed range and a plurality of integral values are calculated, the maximum integral value, which is the maximum value of the aforementioned integral values, is detected, and the demodulation timing at which multicarrier demodulation is performed is detected from the position of the aforementioned maximum integral value, thereby enabling stable demodulation timing to be detected.

### (Embodiment 10)

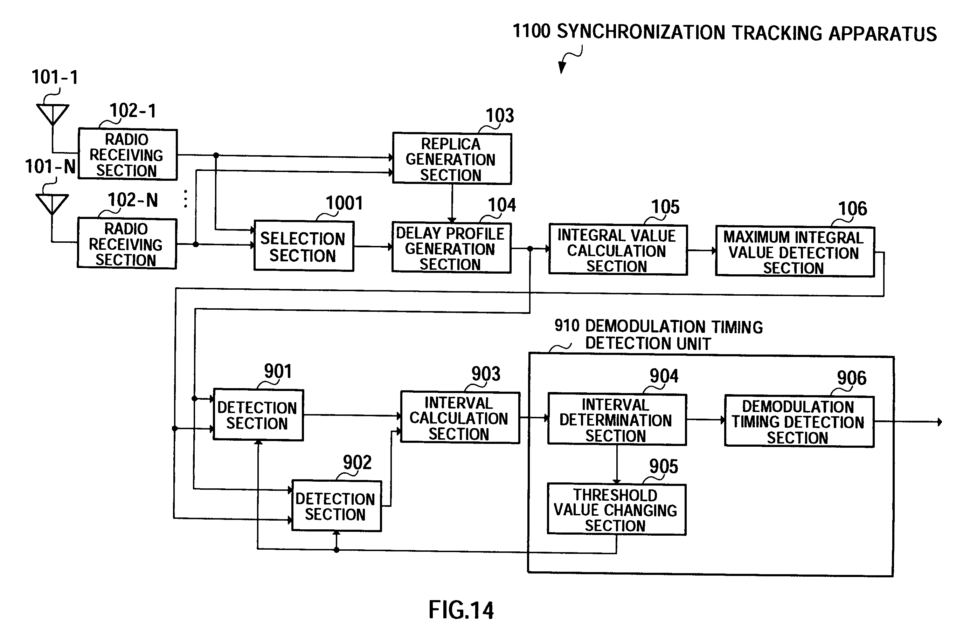

Embodiment 10 of the present invention will now be explained in detail with reference to the accompanying drawings. FIG.14 is a block diagram showing the configuration of a synchronization tracking apparatus according to Embodiment 10 of the present invention. Configuration elements in Embodiment 10 of the present invention identical to those of Embodiment 8 of the present invention are assigned the same reference codes as in Embodiment 8, and descriptions thereof are omitted.

As shown in FIG.14, in a synchronization tracking apparatus 1100 according to Embodiment 10 of the present invention, plurality of antennas 101-1 through 101-N, radio receiving sections 102-1 through 102-N, and a selection section 1101, are provided instead of antenna 101 and radio receiving section 102 of synchronization tracking apparatus 900 according to Embodiment 8 of the present invention.

That is to say, synchronization tracking apparatus 1100 according to Embodiment 10 of the present invention comprises plurality of antennas 101-1 through 101-N, radio receiving sections 102-1 through 102-N, selection section 1101, replica generation section 103, delay profile generation section 104, integral value calculation section 105, maximum integral value detection section 106, detection sections 901 and 902, interval calculation section 903, interval determination section 904, threshold value changing section 905, and demodulation timing detection section 906.

The input terminals of radio receiving sections 102-1 through 102-N are connected to the output terminals of antennas 101-1 through 101-N. The input terminals of replica generation section 103 are connected to the output terminals of radio receiving sections 102-1 through 102-N. The input terminals of selection section 1101 are connected to the output terminals of radio receiving sections 102-1 through 102-N. The input terminals of delay profile generation section 104 are connected to the output terminals of selection section 1101 and replica generation section 103.

Operations of synchronization tracking apparatus 1100 according to Embodiment 10 of the present invention that differ from those of Embodiment 8 of the present invention will now be described.

Antennas 101-1 through 101-N receive a plurality of radio transmit signals transmitted from a transmitting apparatus (not shown), generate received signals, and send these received signals to radio receiving sections 102-1 through 102-N. Radio receiving sections 102-1 through 102-N perform predetermined processing on the plurality of received signals from antennas 101-1 through 101-N, and send the processed plurality of received signals to replica generation section 103 and selection section 1101. Replica generation section 103 performs multicarrier demodulation of a known signal of the plurality of received signals from radio receiving sections 102-1 through 102-N, generates a replica, and sends this replica to delay profile generation section 104. Selection section 1101 selects the received signal with the best reception quality from the plurality of received signals from radio receiving sections 102-1 through 102-N, and sends this received signal to delay profile generation section 104. Delay profile generation section 104 calculates a correlation value between the replica from replica generation section 103 and the received signal from selection section 1101, and generates a delay profile.

Thus, according to Embodiment 10 of the present invention, in addition to obtaining the effect of Embodiment 8 of the present invention, a delay profile is generated based on the received signal with the best reception quality among a plurality of received signals, correlation value integration is performed for each fixed range of this delay profile and a plurality of integral values are calculated, the maximum integral value, which is the maximum value of the aforementioned integral values, is detected, and the demodulation timing at which multicarrier demodulation is performed is detected from the position of the aforementioned maximum integral value, thereby enabling highly precise demodulation timing to be detected.

### (Embodiment 11)

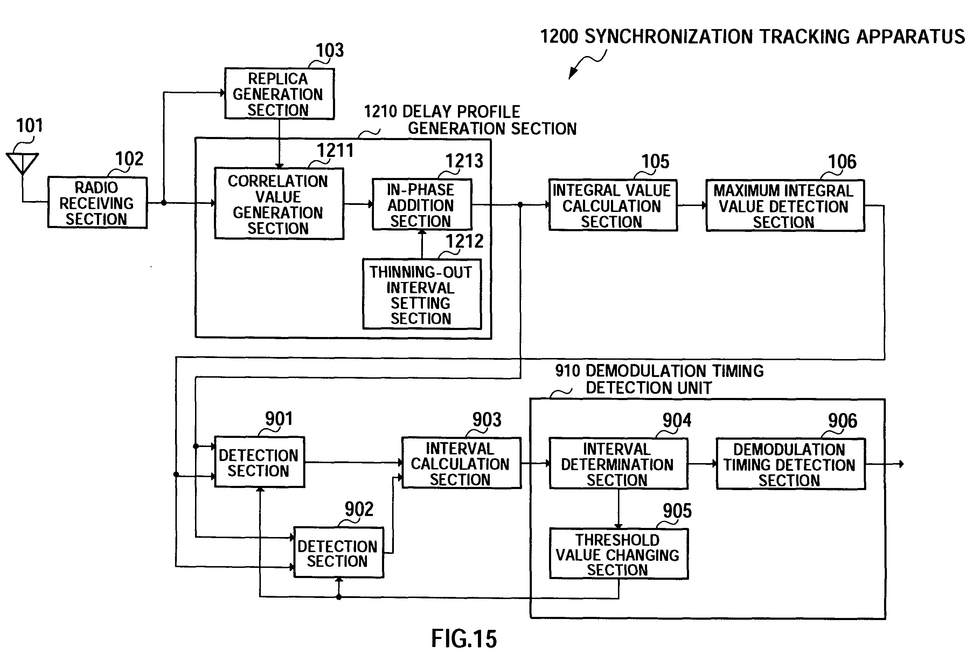

Embodiment 11 of the present invention will now be explained in detail with reference to the accompanying drawings. FIG.15 is a block diagram showing the configuration of a synchronization tracking apparatus according to Embodiment 11 of the present invention. Configuration elements in Embodiment 11 of the present invention identical to those of Embodiment 8 of the present invention are assigned the same reference codes as in Embodiment 8, and descriptions thereof are omitted.

As shown in FIG.15, in a synchronization tracking apparatus 1200 according to Embodiment 11 of the present invention, a delay profile generation section 1210 is provided instead of delay profile generation section 104 of synchronization tracking apparatus 900 according to Embodiment 8 of the present invention. That is to say, synchronization tracking apparatus 1200 according to Embodiment 11 of the present invention comprises antenna 101, radio receiving section 102, replica generation section 103, delay profile generation section 1210, integral value calculation section 105, maximum integral value detection section 106, detection sections 901 and 902, interval calculation section 903, interval determination section 904, threshold value changing section 905, and demodulation timing detection section 906.

Delay profile generation section 1210 comprises a correlation value generation section 1211, thinning-out interval setting section 1212, and in-phase addition section 1213. An input terminal of correlation value generation section 1211 is connected to the output terminal of radio receiving section 102. The input terminals of in-phase addition section 1213 are connected to the output terminals of correlation value generation section 1211 and thinning-out interval setting section 1212. The output terminal of in-phase addition section 1213 is connected to the input terminal of integral value calculation section 105.

Operations of synchronization tracking apparatus 1200 according to Embodiment 11 of the present invention that differ from those of Embodiment 8 of the present invention will now be described.

Correlation value generation section 1211 calculates a correlation value between a replica from replica generation section 103 and a received signal from radio receiving section 102, and sends this correlation value to in-phase addition section 1213. Thinning-out interval setting section 1212 sets a thinning-out interval and conveys this thinning-out interval to in-phase addition section 1213. When performing in-phase addition of correlation values from correlation value generation section 1211, in-phase addition section 1213 thins out correlation values based on the thinning-out interval from thinning-out interval setting section 1212 and performs in-phase addition, generates a correlation value, and sends this correlation value to integral value calculation section 105.

Thus, according to Embodiment 11 of the present invention, in addition to obtaining the effect of Embodiment 8 of the present invention, when performing in-phase addition of delay profile correlation values, correlation values are thinned out based on a predetermined thinning-out interval in performing in-phase addition, a correlation value is generated, correlation value integration is performed for each fixed range of the delay profile and a plurality of integral values are calculated, the maximum integral value, which is the maximum value of the aforementioned integral values, is detected, and the demodulation timing at which multicarrier demodulation is performed is detected from the position of the aforementioned maximum integral value, thereby enabling the amount of computation to be reduced.

The gist of Embodiments 12 through 15 of the present invention is that aforementioned correlation value integration is performed for each fixed range of a delay profile of a received signal and a plurality of integral values are calculated, the maximum integral value which is the maximum value of the aforementioned integral values is detected, a first position at which a correlation value first exceeds a threshold value in the positive direction which is the direction in which time advances from the maximum peak value is detected in a fixed range in which the aforementioned maximum integral value is calculated, a second position at which the aforementioned correlation value first exceeds the aforementioned threshold value in the negative direction which is the direction in which time is counted backward from the maximum peak value is detected in the aforementioned fixed range in which the aforementioned maximum integral value is calculated, the interval from the aforementioned first position to the aforementioned second position is calculated based on the aforementioned first and second position information and interval information is generated, and demodulation timing is detected based on the aforementioned interval information and the aforementioned second position information.

### (Embodiment 12)

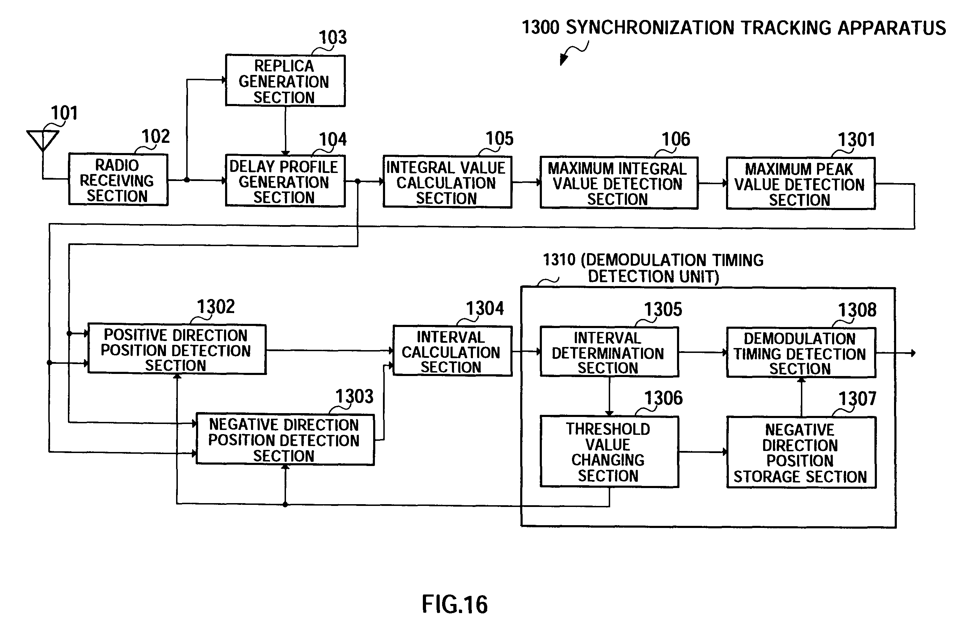

FIG. 16 is a block diagram showing the configuration of a synchronization tracking apparatus according to Embodiment 12 of the present invention.

As shown in FIG.16, a synchronization tracking apparatus 1300 according to Embodiment 12 of the present invention comprises As shown in FIG.16, a synchronization tracking apparatus 1300 according to Embodiment 12 of the present invention comprises antenna 101, radio receiving section 102, replica generation section 103, delay profile generation section 104, integral value calculation section 105, maximum integral value detection section 106, a maximum peak value detection section 1301, positive direction position detection section 1302, negative direction position detection section 1303, interval calculation section 1304, interval determination section 1305, threshold value changing section 1306, negative direction position storage section 1307, and demodulation timing detection section 1308.

The input terminal of radio receiving section 102 is connected to the output terminal of antenna 101. The input terminal of replica generation section 103 is connected to the output terminal of radio receiving section 102. The input terminals of delay profile generation section 104 are connected to the output terminals of radio receiving section 102 and replica generation section 103. The input terminal of integral value calculation section 105 is connected to the output terminal of delay profile generation section 104. The input terminal of maximum integral value detection section 106 is connected to the output terminal of integral value calculation section 105. The input terminal of maximum peak value detection section 1301 is connected to the output terminal of maximum integral value detection section 106. Input terminals of positive direction position detection section 1302 and negative direction position detection section 1303 are connected to the output terminals of delay profile generation section 104 and maximum peak value detection section 1301. The input terminals of interval calculation section 1304 are connected to the output terminals of positive direction position detection section 1302 and negative direction position detection section 1303. The input terminal of threshold value changing section 1306 is connected to an output terminal of interval determination section 1305. An output terminal of threshold value changing section 1306 is connected to input terminals of positive direction position detection section 1302 and negative direction position detection section 1303. The input terminal of negative direction position storage section 1307 is connected to an output terminal of threshold value changing section 1306. The input terminals of demodulation timing detection section 1308 are connected to output terminals of interval determination section 1305 and negative direction position storage section 1307.

Antenna 101 receives a radio transmit signal transmitted from a transmitting apparatus (not shown), generates a received signal, and sends this received signal to radio receiving section 102. Radio receiving section 102 performs predetermined processing on the received signal from antenna 101, and sends the processed received signal to replica generation section 103 and delay profile generation section 104. Replica generation section 103 performs multicarrier demodulation of a known signal of the received signal from radio receiving section 102, generates a replica, and sends this replica to delay profile generation section 104. Delay profile generation section 104 calculates a correlation value between the replica from replica generation section 103 and the received signal, generates a delay profile, and sends this delay profile to integral value calculation section 105.

Integral value calculation section 105 performs correlation value integration for each fixed range of a delay profile from delay profile generation section 104, calculates a plurality of integral values, and sends these integral values to maximum integral value detection section 106. That is to say, integral value calculation section 105 shifts a certain fixed range (several samples) at a time from the start of the delay profile, integrates the respective correlation values, and calculates a plurality of integral values.

Maximum integral value detection section 106 detects the maximum integral value, which is the maximum value of integral values from integral value calculation section 105, and sends this maximum integral value to maximum peak value detection section 1301. Maximum peak value detection section 1301 detects the maximum peak value of correlation values in the fixed range in which the maximum integral value from maximum integral value detection section 106 is calculated, and sends this maximum peak value to positive direction position detection section 1302 and negative direction position detection section 1303.

Positive direction position detection section 1302 detects a first position at which a correlation value first exceeds a threshold value in the positive direction, which is the direction in which time advances from the maximum peak value, in the fixed range in which the maximum integral value is calculated, generates first position information, and sends this first position information to interval calculation section 1304. Negative direction position detection section 1303 detects a second position at which a correlation value first exceeds a threshold value in the negative direction, which is the direction in which time is counted backward from the maximum peak value, in the fixed range in which the maximum integral value is calculated, generates second position information, and sends this second position information to interval calculation section 1304. Based on the first and second position information from positive direction position detection section 1302 and negative direction position detection section 1303, interval calculation section 1304 calculates the interval from the first position to the second position, generates interval information, and sends this interval information to interval determination section 1305.

Interval determination section 1305 receives the first and second position information and interval information from interval calculation section 1304, determines whether the interval indicated by the interval information is greater than or equal to a reference interval, generates a determination result, and sends this determination result to threshold value changing section 1306 and demodulation timing detection section 1308. When it is indicated by the determination result from interval determination section 1305 that the interval is not greater than or equal to the reference interval, threshold value changing section 1306 changes the threshold value and sends the changed threshold value to positive direction position detection section 1302 and negative direction position detection section 1303. Also, when it is indicated by the determination result from interval determination section 1305 that the interval is not greater than or equal to the aforementioned reference interval, threshold value changing section 1306 sends second position information to negative direction position storage section 1307. Negative direction position storage section 1307 receives the second position information from threshold value changing section 1306 and stores that second position information.

At the time at which a change is made from when it is indicated by the aforementioned determination result from interval determination section 1305 that the interval is not greater than or equal to the aforementioned reference interval to when it is indicated that the interval is greater than or equal to the aforementioned reference interval, demodulation timing detection section 1308 reads the second position information from negative direction position storage section 1307, and detects the demodulation timing based on the second position of that second position information.

The combination of interval determination section 1305, threshold value changing section 1306, negative direction position storage section 1307, and demodulation timing detection section 1308, makes up a demodulation timing detection unit 1310 that detects the demodulation timing based on the interval information and second position information.

According to Embodiment 12 of the present invention, integration is performed for each fixed range of a received signal delay profile and a plurality of integral values are calculated, the maximum integral value, which is the maximum value of the aforementioned integral values, is detected, and the demodulation timing at which multicarrier demodulation is performed is detected from the position of the aforementioned maximum integral value, so that when the delay profile peak value and path group positions are widely separated on the time axis, since the integral value of correlation values of the fixed range in which the correlation value peak value is located is small, the path signal of the correlation value peak value can be eliminated and demodulation timing can be detected, and the demodulation timing at which there is the least effect on reception quality can be detected, enabling multipath effects to be mitigated and reception quality to be improved.

Also, according to Embodiment 12 of the present invention, a first position at which a delay profile correlation value first exceeds a threshold value in the positive direction, which is the direction in which time advances from the maximum peak value, is detected in the fixed range in which the maximum integral value is calculated, a second position at which a delay profile correlation value first exceeds the aforementioned threshold value in the negative direction, which is the direction in which time is counted backward from the aforementioned maximum peak value, is detected in the aforementioned fixed range in which the aforementioned maximum integral value is calculated, the interval from the aforementioned first position to the aforementioned second position is calculated based on the aforementioned first and second position information and interval information is generated, and demodulation timing can be detected based on the aforementioned interval information and second position information, thereby enabling accurate demodulation timing to be detected in any kind of multipath environment.

### (Embodiment 13)

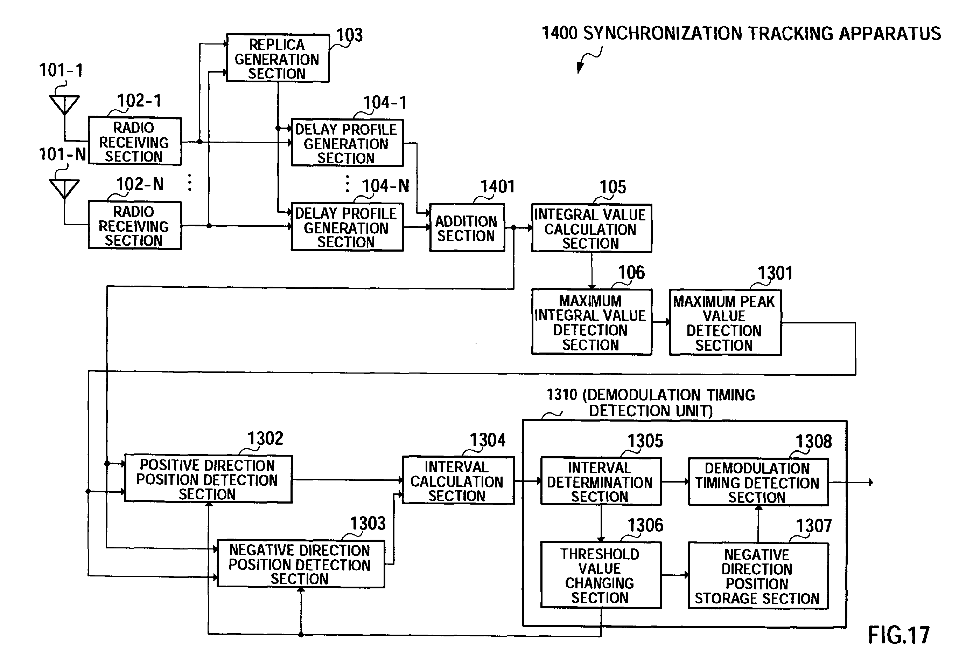

Embodiment 13 of the present invention will now be explained in detail with reference to the accompanying drawings. FIG.17 is a block diagram showing the configuration of a synchronization tracking apparatus according to Embodiment 13 of the present invention. Configuration elements in Embodiment 13 of the present invention identical to those of Embodiment 12 of the present invention are assigned the same reference codes as in Embodiment 12, and descriptions thereof are omitted.

As shown in FIG.17, in a synchronization tracking apparatus 1400 according to Embodiment 13 of the present invention, a plurality of antennas 101-1 through 101-N, radio receiving sections 102-1 through 102-N, delay profile generation sections 104-1 through 104-N, and an addition section 1401, are provided instead of antenna 101, radio receiving section 102, and delay profile generation section 104 of synchronization tracking apparatus 1300 according to Embodiment 12 of the present invention.

That is to say, synchronization tracking apparatus 1400 according to Embodiment 13 of the present invention comprises plurality of antennas 101-1 through 101-N, radio receiving sections 102-1 through 102-N, delay profile generation sections 104-1 through 104-N, addition section 1401, replica generation section 103, integral value calculation section 105, maximum integral value detection section 106, maximum peak value detection section 1301, positive direction position detection section 1302, negative direction position detection section 1303, interval calculation section 1304, interval determination section 1305, threshold value changing section 1306, negative direction position storage section 1307, and demodulation timing detection section 1308.

The input terminals of radio receiving sections 102-1 through 102-N are connected to the output terminals of antennas 101-1 through 101-N. The input terminals of replica generation section 103 are connected to the output terminals of radio receiving sections 102-1 through 102-N. The input terminals of delay profile generation sections 104-1 through 104-N are connected to the output terminals of radio receiving sections 102-1 through 102-N and replica generation section 103. The input terminals of addition section 401 are connected to the output terminals of delay profile generation sections 104-1 through 104-N.

Operations of synchronization tracking apparatus 1400 according to Embodiment 13 of the present invention that differ from those of Embodiment 12 of the present invention will now be described.

Antennas 101-1 through 101-N receive a plurality of radio transmit signals transmitted from a transmitting apparatus (not shown), generate received signals, and send these received signals to radio receiving sections 102-1 through 102-N. Radio receiving sections 102-1 through 102-N perform predetermined processing on the plurality of received signals from antennas 101-1 through 101-N, and send the processed plurality of received signals to replica generation section 103 and delay profile generation sections 104-1 through 104-N. Replica generation section 103 performs multicarrier demodulation of a known signal of the plurality of received signals from radio receiving sections 102-1 through 102-N, generates a replica, and sends this replica to delay profile generation sections 104-1 through 104-N. Delay profile generation sections 104-1 through 104-N calculate correlation values between the replica from replica generation section 103 and the plurality of received signals, generate a plurality of delay profiles, and send these delay profiles to addition section 1401. Addition section 1401 adds the plurality of delay profiles from delay profile generation sections 104-1 through 104-N and sends the result to integral value calculation section 105.

Thus, according to Embodiment 13 of the present invention, in addition to obtaining the effect of Embodiment 12 of the present invention, a plurality of delay profiles are generated based on a plurality of received signals, these delay profiles are added, correlation value integration is performed for each fixed range of the added delayprofile and a plurality of integral values are calculated, the maximum integral value, which is the maximum value of the aforementioned integral values, is detected, and the demodulation timing at which multicarrier demodulation is performed is detected from the position of the aforementioned maximum integral value, thereby enabling stable demodulation timing to be detected.

### (Embodiment 14)

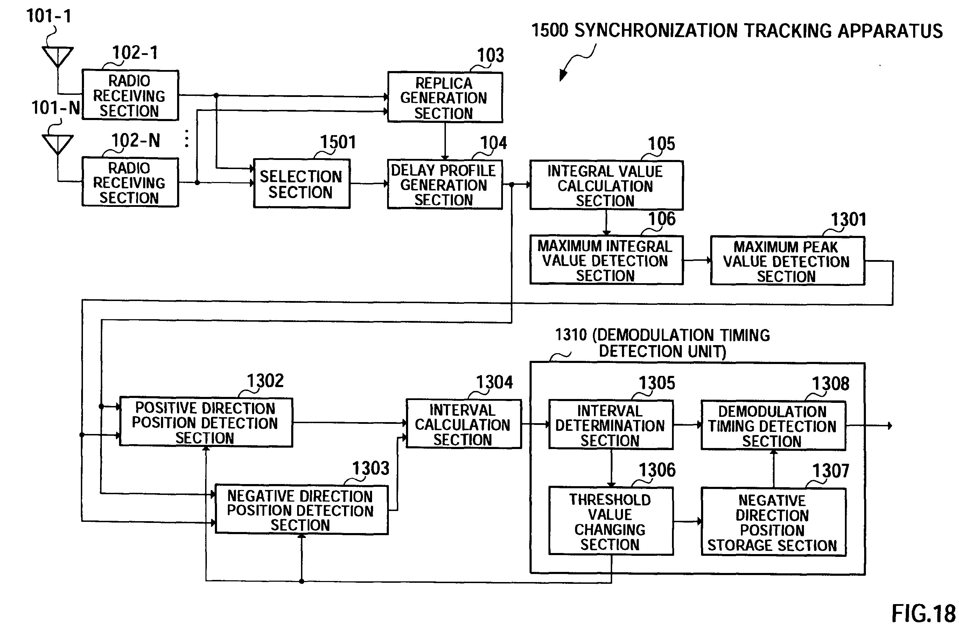

Embodiment 14 of the present invention will now be explained in detail with reference to the accompanying drawings. FIG.18 is a block diagram showing the configuration of a synchronization tracking apparatus according to Embodiment 14 of the present invention. Configuration elements in Embodiment 14 of the present invention identical to those of Embodiment 12 of the present invention are assigned the same reference codes as in Embodiment 12, and descriptions thereof are omitted.

As shown in FIG.18, in a synchronization tracking apparatus 1500 according to Embodiment 14 of the present invention, plurality of antennas 101-1 through 101-N, radio receiving sections 102-1 through 102-N, and a selection section 1501, are provided instead of antenna 101 and radio receiving section 102 of synchronization tracking apparatus 1300 according to Embodiment 12 of the present invention.

That is to say, synchronization tracking apparatus 1500 according to Embodiment 14 of the present invention comprises plurality of antennas 101-1 through 101-N, radio receiving sections 102-1 through 102-N, selection section 1501, replica generation section 103, delay profile generation section 104, integral value calculation section 105, maximum integral value detection section 106, maximum peak value detection section 1301, positive direction position detection section 1302, negative direction position detection section 1303, interval calculation section 1304, interval determination section 1305, threshold value changing section 1306, negative direction position storage section 1307, and demodulation timing detection section 1308.

The input terminals of radio receiving sections 102-1 through 102-N are connected to the output terminals of antennas 101-1 through 101-N. The input terminals of replica generation section 103 are connected to the output terminals of radio receiving sections 102-1 through 102-N. The input terminals of selection section 1501 are connected to the output terminals of radio receiving sections 102-1 through 102-N. The input terminals of delay profile generation section 104 are connected to the output terminals of selection section 1501 and replica generation section 103.

Operations of synchronization tracking apparatus 1500 according to Embodiment 14 of the present invention that differ from those of Embodiment 12 of the present invention will now be described.

Antennas 101-1 through 101-N receive a plurality of radio transmit signals transmitted from a transmitting apparatus (not shown), generate received signals, and send these received signals to radio receiving sections 102-1 through 102-N. Radio receiving sections 102-1 through 102-N perform predetermined processing on the plurality of received signals from antennas 101-1 through 101-N, and send the processed plurality of received signals to replica generation section 103 and selection section 1501. Replica generation section 103 performs multicarrier demodulation of a known signal of the plurality of received signals from radio receiving sections 102-1 through 102-N, generates a replica, and sends this replica to delay profile generation section 104. Selection section 1501 selects the received signal with the best reception quality from the plurality of received signals from radio receiving sections 102-1 through 102-N, and sends this received signal to delay profile generation section 104. Delay profile generation section 104 calculates a correlation value between the replica from replica generation section 103 and the received signal from selection section 1501, and generates a delay profile.

Thus, according to Embodiment 14 of the present invention, in addition to obtaining the effect of Embodiment 12 of the present invention, a delay profile is generated based on the received signal with the best reception quality among a plurality of received signals, correlation value integration is performed for each fixed range of the delay profile and a plurality of integral values are calculated, the maximum integral value, which is the maximum value of the aforementioned integral values, is detected, and the demodulation timing at which multicarrier demodulation is performed is detected from the position of the aforementioned maximum integral value, thereby enabling highly precise demodulation timing to be detected.

### (Embodiment 15)

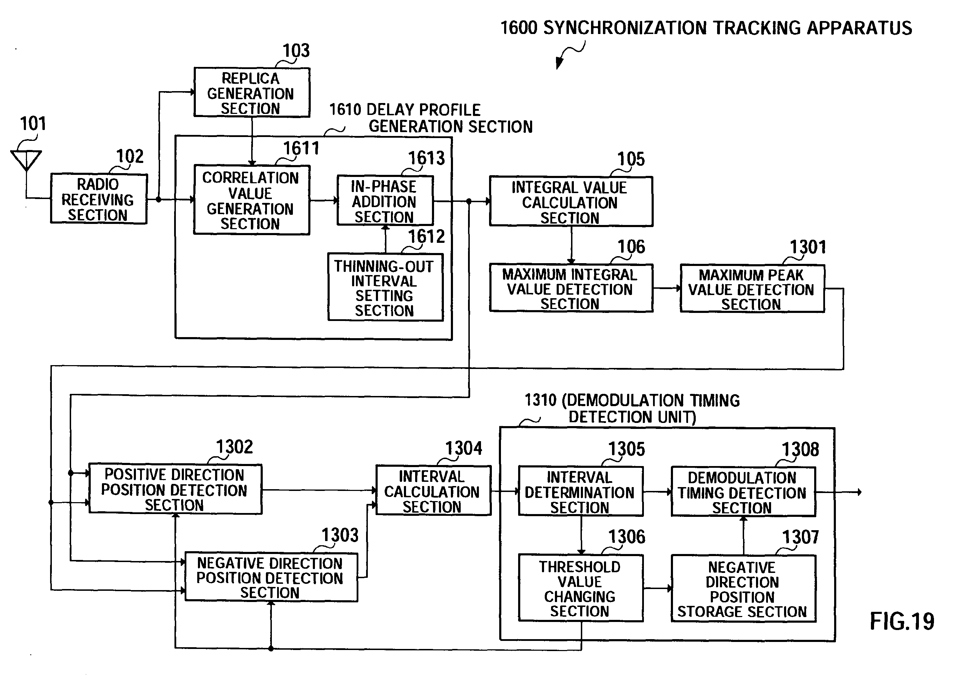

Embodiment 15 of the present invention will now be explained in detail with reference to the accompanying drawings. FIG.19 is a block diagram showing the configuration of a synchronization tracking apparatus according to Embodiment 15 of the present invention. Configuration elements in Embodiment 15 of the present invention identical to those of Embodiment 12 of the present invention are assigned the same reference codes as in Embodiment 12, and descriptions thereof are omitted.

As shown in FIG.19, in a synchronization tracking apparatus 1600 according to Embodiment 15 of the present invention, a delay profile generation section 1610 is provided instead of delay profile generation section 104 of synchronization tracking apparatus 1300 according to Embodiment 12 of the present invention. That is to say, synchronization tracking apparatus 1600 according to Embodiment 15 of the present invention comprises antenna 101, radio receiving section 102, replica generation section 103, delay profile generation section 1610, integral value calculation section 105, maximum integral value detection section 106, maximum peak value detection section 1301, positive direction position detection section 1302, negative direction position detection section 1303, interval calculation section 1304, interval determination section 1305, threshold value changing section 1306, negative direction position storage section 1307, and demodulation timing detection section 1308.

Delay profile generation section 1610 comprises a correlation value generation section 1611, thinning-out interval setting section 1612, and in-phase addition section 1613. The input terminals of correlation value generation section 1611 are connected to the output terminals of radio receiving section 102 and replica generation section 103. The input terminals of in-phase addition section 1613 are connected to the output terminals of correlation value generation section 1611 and thinning-out interval setting section 1612. The output terminal of in-phase addition section 1613 is connected to the input terminal of integral value calculation section 105.

Operations of synchronization tracking apparatus 1600 according to Embodiment 15 of the present invention that differ from those of Embodiment 12 of the present invention will now be described.

Correlation value generation section 1611 calculates a correlation value between a replica from replica generation section 103 and a received signal from radio receiving section 102, and sends this correlation value to in-phase addition section 1613. Thinning-out interval setting section 1612 sets a thinning-out interval and conveys this thinning-out interval to in-phase addition section 1613. When performing in-phase addition of correlation values from correlation value generation section 1611, in-phase addition section 1613 thins out correlation values based on the thinning-out interval from thinning-out interval setting section 1612 and performs in-phase addition, generates a correlation value, and sends this correlation value to integral value calculation section 105.

Thus, according to Embodiment 15 of the present invention, in addition to obtaining the effect of Embodiment 12 of the present invention, when performing in-phase addition of delay profile correlation values, correlation values are thinned out based on a predetermined thinning-out interval in performing in-phase addition, a correlation value is generated, correlation value integration is performed for each fixed range of the delay profile and a plurality of integral values are calculated, the maximum integral value, which is the maximum value of the aforementioned integral values, is detected, and the demodulation timing at which multicarrier demodulation is performed is detected from the position of the aforementioned maximum integral value, thereby enabling the amount of computation to be reduced.

This application is based on Japanese Patent Application No.2002-320445 filed on November 1, 2002, and Japanese Patent Application No.2002-332052 and Japanese Patent Application No.2002-332053 filed on November 15, 2002, the entire content of which is expressly incorporated by reference herein. Industrial Applicability

The present invention is applicable to a multicarrier communication system and method.

## Claims

1. A synchronization tracking apparatus comprising:
a replica generation section that performs multicarrier demodulation of a known signal of a received signal and generates a replica;
a delay profile generation section that calculates a correlation value between said replica and said received signal and generates a delay profile;
an integral value calculation section that integrates said correlation values for each fixed range of said delay profile and calculates a plurality of integral values;
a maximum integral value detection section that detects a maximum integral value which is a maximum value of said integral values; and
a demodulation timing detection section that detects demodulation timing at which multicarrier demodulation is performed from a position of said maximum integral value.

2. The synchronization tracking apparatus according to claim 1, further comprising:
a first detection section that detects a first position at which said correlation value of said delay profile from said delay profile generation section first exceeds a threshold value from a start of saiddelayprofile and generates first position information;
a second detection section that detects a second position at which said correlation value of said delay profile from said delay profile generation section first exceeds said threshold value from an end of said delay profile and generates second position information; and
an interval calculation section that calculates an interval from said first position to said second position based on said first and second position information from said first and second detection sections and generates interval information, and sends that interval information to said integral value calculation section;
wherein said integral value calculation section, within an interval indicated by said interval information, integrates correlation values for each fixed range of said delay profile from said delay profile generation section, calculates a plurality of integral values, and sends that plurality of integral values to said maximum integral value detection section.

3. The synchronization tracking apparatus according to claim 1, wherein:
said replica generation section performs multicarrier demodulation of a known signal of a plurality of received signals, generates a replica, and sends that replica to said delay profile generation section; and
said delay profile generation section calculates a correlation value between said replica and said plurality of received signals and generates a plurality of delay profiles;
said synchronization tracking apparatus further comprising an addition section that adds said plurality of delay profiles from said delay profile generation section and sends a result to said integral value calculation section.

4. The synchronization tracking apparatus according to claim 1,
wherein said replica generation section performs multicarrier demodulation of a known signal of a plurality of received signals, generates a replica, and sends that replica to said delay profile generation section;
wherein said synchronization tracking apparatus further comprises a selection section that selects a received signal whose reception quality is best from said plurality of received signals and sends that received signal to said delay profile generation section; and
wherein said delay profile generation section calculates a correlation value between said replica from said replica generation section and said received signal from said selection section and generates said delay profile.

5. The synchronization tracking apparatus according to claim 1, wherein said delay profile generation section comprises:
a correlation value generation part that calculates a correlation value between said replica from said replica generation section and said received signal;
a thinning-out interval setting part that sets a thinning-out interval; and
an in-phase addition part that, when performing in-phase addition of said correlation values from said correlation value generation part, thins out correlation values at said thinning-out interval from said thinning-out interval setting part, performs correlation value in-phase addition, generates a correlation value, and sends that correlation value to said integral value calculation section.

6. The synchronization tracking apparatus according to claim 1, further comprising:
a delay spread value calculation section that generates a delay spread value indicating a spread of correlation values of said delay profile from said delay profile generation section; and
a delay spread value determination section that determines whether said delay spread value is greater than or equal to a reference value and generates a determination result;
wherein said integral value calculation section integrates correlation values for each fixed range of said delay profile and calculates a plurality of integral values when it is indicated by said determination result from said delay spread value determination section that said delay spread value is greater than or equal to said reference value;
said synchronization tracking apparatus further comprising:
a first detection section that detects a first position at which a correlation value of said delayprofile first exceeds a threshold value from a start of said delay profile and generates first position information when it is indicated by said determination result that said delay spread value is not greater than or equal to said reference value;
a second detection section that detects a second position at which a correlation value of said delayprofile first exceeds said threshold value from an end of said delay profile and generates first position information when it is indicated by said determination result that said delay spread value is not greater than or equal to said reference value;
an interval calculation section that calculates an interval from said first position to said second position based on said first and second position information and generates interval information;
an interval determination section that determines whether an interval indicated by said interval information is greater than or equal to a reference value and generates a determination result;
a threshold value changing section that changes said threshold value and sends a resulting threshold value to said first and second detection sections when it is indicated by said determination result from said interval determination section that an interval is greater than or equal to said reference interval; and
another demodulation timing detection section that, when it is indicated by said determination result from said interval determination section that said interval is not greater than or equal to said reference interval, receives said first position information from said interval determination section and detects demodulation timing based on said first position of that first position information.

7. The synchronization tracking apparatus according to claim 1, further comprising:
a delay spread value calculation section that generates a delay spread value indicating a spread of said correlation values of said delay profile from said delay profile generation section; and
a delay spread value determination section that determines whether said delay spread value is greater than or equal to a reference value and generates a determination result;
wherein said integral value calculation section integrates correlation values for each fixed range of said delay profile and calculates a plurality of integral values when it is indicated by said determination result from said delay spread value determination section that said delay spread value is greater than or equal to said reference value;
said synchronization tracking apparatus further comprising:
a maximum peak value detection section that detects a maximum peak value of said correlation values of said delay profile when it is indicated by said determination result that said delay spread value is greater than or equal to a reference value;
a first detection section that generates first position information indicating a first position at which said correlation value of said delay profile first becomes greater than or equal to a threshold value in a positive direction which is a direction in which time advances from said maximum peak value;
a second detection section that generates second position information indicating a second position at which said correlation value of said delay profile first becomes greater than or equal to said threshold value in a negative direction which is a direction in which time is counted backward from said maximum peak value;
an interval calculation section that calculates an interval from said first position to said second position based on said first and second position information and generates interval information;
an interval determination section that determines whether said interval indicated by said interval information is greater than or equal to a reference value and generates a determination result;
a threshold value changing section that changes a threshold value and sends a resulting threshold value to said first and second detection sections when it is indicated by said determination result from said interval determination section that said interval is not greater than or equal to said reference interval;
a negative direction position storage section that receives said second position information from said threshold value changing section and stores said second position information when it is indicated that said interval is not greater than or equal to said reference interval; and
another demodulation timing detection section that, at a time at which a change is made from when it is indicated by said determination result from said interval determination section that said interval is not greater than or equal to said reference interval to when it is indicated that said interval is greater than or equal to said reference interval, reads said second position information of said negative direction position storage section and detects demodulation timing based on said second position of that second position information.

8. A synchronization tracking method comprising:
a replica generation step of performing multicarrier demodulation of a known signal of a received signal and generating a replica;
a delay profile generation step of calculating a correlation value between said replica and said received signal and generating a delay profile;
an integration step of integrating said correlation values for each fixed range of said delay profile and calculating a plurality of integral values;
a maximum integral value detection step of detecting a maximum integral value which is a maximum value of said integral values; and
a demodulation timing detection step of detecting demodulation timing at which multicarrier demodulation is performed from a position of said maximum integral value.

9. A synchronization tracking apparatus comprising:
a replica generation section that performs multicarrier demodulation of a known signal of a received signal and generates a replica;
a delay profile generation section that calculates a correlation value between said replica and said received signal and generates a delay profile;
an integral value calculation section that integrates said correlation values for each fixed range of said delay profile and calculates a plurality of integral values;
a maximum integral value detection section that detects a maximum integral value which is a maximum value of said integral values;
a first detection section that detects a first position at which said correlation value of said delay profile from said delay profile generation section first exceeds a threshold value from a start of saiddelayprofile in said fixed range in which said maximum integral value is calculated and generates first position information;
a second detection section that detects a second position at which said correlation value of said delay profile from said delay profile generation section first exceeds said threshold value from an end of said delay profile in said fixed range in which said maximum integral value is calculated and generates second position information;
an interval calculation section that calculates an interval from said first position to said second position based on said first and second position information and generates interval information; and
a demodulation timing detection section that detects demodulation timing based on said interval information.

10. The synchronization tracking apparatus according to claim 9, wherein said demodulation timing detection section comprises:
an interval determination part that receives said first and second position information and said interval information from said interval calculation section, determines whether said interval indicated by said interval information is greater than or equal to a reference value, and generates a determination result;
a threshold value changing part that changes said threshold value and sends a resulting threshold value to said first and second detection sections when it is indicated by said determination result from said interval determination part that said interval is greater than or equal to said reference interval; and
a demodulation timing detection part that, when it is indicated by said determination result from said interval determination part that said interval is not greater than or equal to said reference interval, receives said first position information from said interval determination part and detects demodulation timing based on said first position of that first position information.

11. The synchronization tracking apparatus according to claim 9, wherein:
said replica generation section performs multicarrier demodulation of a known signal of a plurality of received signals, generates a replica, and sends that replica to said delay profile generation section; and
said delay profile generation section calculates a correlation value between said replica and said plurality of received signals and generates a plurality of delay profiles;
said synchronization tracking apparatus further comprising an addition section that adds said plurality of delay profiles from said delay profile generation section and sends a result to said integral value calculation section.

12. The synchronization tracking apparatus according to claim 9,
wherein said replica generation section performs multicarrier demodulation of a known signal of a plurality of received signals, generates a replica, and sends that replica to said delay profile generation section;
wherein said synchronization tracking apparatus further comprising a selection section that selects a received signal whose reception quality is best from said plurality of received signals and sends that received signal to said delay profile generation section; and
wherein said delay profile generation section calculates a correlation value between said replica from said replica generation section and said received signal from said selection section and generates said delay profile.

13. The synchronization tracking apparatus according to claim 9, wherein said delay profile generation section comprises:
a correlation value generation part that calculates said correlation value between said replica from said replica generation section and said received signal;
a thinning-out interval setting part that sets a thinning-out interval; and
an in-phase addition part that, when performing in-phase addition of said correlation values from said correlation value generation part, thins out correlation values at said thinning-out interval from said thinning-out interval setting part, performs correlation value in-phase addition, generates a correlation value, and sends that correlation value to said integral value calculation section.

14. A synchronization tracking method comprising:
a replica generation step of performing multicarrier demodulation of a known signal of a received signal and generating a replica;
a delay profile generation step of calculating a correlation value between said replica and said received signal and generating a delay profile;
an integral value calculation step of integrating said correlation values for each fixed range of said delay profile and calculating a plurality of integral values;
a maximum integral value detection step of detecting a maximum integral value which is a maximum value of said integral values;
a first detection step of having a first detection section detect a first position at which said correlation value of said delay profile first exceeds a threshold value from a start of said delay profile in said fixed range in which said maximum integral value is calculated, and generate first position information;
a second detection step of having a second detection section detect a secondposition at which said correlation value of said delay profile first exceeds said threshold value from an end of said delay profile in said fixed range in which said maximum integral value is calculated, and generate second position information;
an interval calculation step of calculating an interval from said first position to said second position based on said first and second position information and generating interval information, and sending that interval information to said integral value calculation section;
an interval determination step of determining whether an interval indicated by said interval information is greater than or equal to a reference value and generating a determination result;
a threshold value changing step of changing said threshold value and sending a resulting threshold value to said first and second detection sections when it is indicated by said determination result in said interval determination step that said interval is greater than or equal to said reference interval; and
a demodulation timing detection step of, when it is indicated by said determination result in said interval determination step that said interval is not greater than or equal to said reference interval, receiving said first position information and detecting demodulation timing based on said first position of that first position information.

15. A synchronization tracking apparatus comprising:
a replica generation section that performs multicarrier demodulation of a known signal of a received signal and generates a replica;
a delay profile generation section that calculates a correlation value between said replica and said received signal and generates a delay profile;
an integral value calculation section that integrates said correlation values for each fixed range of said delay profile and calculates a plurality of integral values;
a maximum integral value detection section that detects a maximum integral value which is a maximum value of said integral values;
a maximum peak value detection section that detects a maximum peak value of said correlation values in said fixed range in which said maximum integral value is calculated;
a positive direction position detection section that detects a first position at which said correlation value first exceeds a threshold value in a positive direction which is a direction in which time advances from said maximum peak value in said fixed range in which said maximum integral value is calculated, and generates first position information;
a negative direction position detection section that detects a second position at which said correlation value first exceeds said threshold value in a negative direction which is a direction in which time is counted backward from said maximum peak value in said fixed range in which said maximum integral value is calculated, and generates second position information;
an interval calculation section that calculates an interval from said first position to said second position based on said first and second position information and generates interval information; and
a demodulation timing detection section that detects demodulation timing based on said interval information and said second position information.

16. The synchronization tracking apparatus according to claim 15, wherein said demodulation timing detection section comprises:
an interval determination part that receives said first and second position information and said interval information from said interval calculation section, determines whether said interval indicated by said interval information is greater than or equal to a reference value, and generates a determination result;
a threshold value changing part that changes said threshold value and sends a resulting threshold value to said positive direction position detection section and negative direction position detection section when it is indicated by said determination result from said interval determination part that said interval is not greater than or equal to said reference interval;
a negative direction position storage part that receives said second position information from said threshold value changing part and stores said second position information when it is indicated that said interval is not greater than or equal to said reference interval; and
a demodulation timing detection part that, at a time at which a change is made from when it is indicated by said determination result from said interval determination part that said interval is not greater than or equal to said reference interval to when it is indicated that said interval is greater than or equal to said reference interval, reads said second position information of said negative direction position storage part and detects demodulation timing based on said second position of that second position information.

17. The synchronization tracking apparatus according to claim 15, wherein:
said replica generation section performs multicarrier demodulation of a known signal of a plurality of received signals, generates a replica, and sends that replica to said delay profile generation section; and
said delay profile generation section calculates a correlation value between said replica and said plurality of received signals and generates a plurality of delay profiles;
said synchronization tracking apparatus further comprising an addition section that adds said plurality of delay profiles from said delay profile generation section and sends a result to said integral value calculation section.

18. The synchronization tracking apparatus according to claim 15,
wherein said replica generation section performs multicarrier demodulation of a known signal of a plurality of received signals, generates a replica, and sends that replica to said delay profile generation section;
wherein said synchronization tracking apparatus further comprises a selection section that selects a received signal whose reception quality is best from said plurality of received signals and sends that received signal to said delay profile generation section; and
wherein said delay profile generation section calculates said correlation value between said replica from said replica generation section and said received signal from said selection section and generates a delay profile.

19. The synchronization tracking apparatus according to claim 15, wherein said delay profile generation section comprises:
a correlation value generation part that calculates said correlation value between said replica from said replica generation section and said received signal;
a thinning-out interval setting part that sets a thinning-out interval; and
an in-phase addition part that, when performing in-phase addition of said correlation values from said correlation value generation part, thins out correlation values at said thinning-out interval from said thinning-out interval setting part, performs correlation value in-phase addition, generates a correlation value, and sends that correlation value to said integral value calculation section.

20. A synchronization tracking method comprising:
a replica generation step of performing multicarrier demodulation of a known signal of a received signal and generating a replica;
a delay profile generation step of calculating a correlation value between said replica and said received signal and generating a delay profile;
an integral value calculation step of integrating said correlation values for each fixed range of said delay profile and calculating a plurality of integral values;
a maximum integral value detection step of detecting a maximum integral value which is a maximum value of said integral values;
a maximum peak value detection step of detecting a maximum peak value of said correlation values in said fixed range in which said maximum integral value is calculated;
a positive direction position detection step of detecting a first position at which said correlation value first exceeds a threshold value in a positive direction which is a direction in which time advances from said maximum peak value in said fixed range in which said maximum integral value is calculated, and generating first position information;
a negative direction position detection step of detecting a second position at which said correlation value first exceeds said threshold value in a negative direction which is a direction in which time is counted backward from said maximum peak value in said fixed range in which said maximum integral value is calculated, and generating second position information;
an interval calculation step of calculating an interval from said first position to said second position based on said first and second position information and generating interval information; and
a demodulation timing detection step of detecting demodulation timing based on said interval information and said second position information.
